# EUROPÄISCHE PATENTSCHRIFT

(11) **EP 3 557 108 B1**
(45) Veröffentlichungstag und Bekanntmachung des Hinweises auf die Patenterteilung: **20.09.2023**
(21) Anmeldenummer: 19165564.6
(22) Anmeldetag: 27.03.2019
(51) Int. Cl.: F16L 37/084, F16J 15/02, F16L 37/244

(54) **ANSCHLUSSVORRICHTUNG FÜR MEDIENLEITUNGEN**
CONNECTOR DEVICE FOR MEDIA LINES
DISPOSITIF DE RACCORDEMENT POUR CONDUITES DE FLUIDE

(30) Priorität: 28.03.2018 DE 102018107505
(43) Veröffentlichungstag der Anmeldung: 23.10.2019
(73) Patentinhaber: Voss Automotive GmbH, 51688 Wipperfürth (DE)
(72) Erfinder: HAGEN, Harald, 51688 Wipperfürth (DE); ENGELHARD, Frank, 42929 Wermelskirchen (DE); KLEHR, Adrian, 58809 Neuenrade (DE); WASCHKEWITZ, Markus, 51702 Bergneustadt (DE); ROSOWSKI, Evelin, 51679 Wipperfürth (DE); HATOUM, Ihab, 51515 Kürten (DE); HASBERG, Markus, 51688 Wipperfürth (DE); BROMBACH, Michael, 51789 Lindlar (DE)
(74) Vertreter: Dr. Solf & Zapf Patent- und Rechtsanwalts PartG mbB

(56) Entgegenhaltungen:
- EP-A1- 0 330 350
- DE-A1-102005 047 835
- DE-U1- 20 319 959
- DE-U1-202008 009 398
- US-A- 3 814 378

## Beschreibung

Die Erfindung betrifft eine Anschlussvorrichtung für Medienleitungen, mit mindestens einem Kupplungselement, mindestens einem Einsatzteil, wobei das Kupplungselement mindestens eine Anschlussöffnung und mindestens einen Fluidkanal aufweist. Das Einsatzteil ist zumindest teilweise in die Anschlussöffnung einbringbar. Ferner weist das Einsatzteil mindestens ein das Einsatzteil umgebendes Dichtmittel auf, um das Einsatzteil gegenüber der Anschlussöffnung abzudichten. In der Anschlussöffnung sind eine Mehrzahl von Leckageausnehmungen angeordnet.

Anschlussvorrichtungen für Medienleitungen sind im Stand der Technik in einer Vielzahl von Ausgestaltungen bekannt. Bei derartigen Anschlussvorrichtungen dienen die Anschlussöffnungen dem Verbinden des Fluidkanals der Anschlussvorrichtung mit einer Medienleitung. Beispielsweise werden in Anschlussöffnungen eines Kupplungselements sogenannte Einpresspatronen eingesetzt, die innerhalb der Anschlussöffnung fest mit dem Kupplungselement verbunden werden und eine Verbindungsschnittstelle für eine Medienleitung, beispielweise eine Aufnahme für einen Verbindungsstecker, bereitstellen.

EP 0 330 350 A1 offenbart beispielsweise einen Fluidverbinder, bei dem ein Anschlussstecker mittels mehrerer Rasthaken in einer Dichtposition gehalten wird.

DE 203 19 959 U1 offenbart einen Steckverbinder für Medienleitungen mit einem Leckagepfad, durch den in einer Vorarretierstellung das Medium entweichen kann.

DE 20 2008 009 398 U1 offenbart eine Steckkupplung für Druckmittelleitungen, bei der ein Stecker nach dem Einbringen über eine C-förmige Halteklammer gehalten wird.

DE 10 2005 047 835 A1 offenbart eine Steckverbindung für Druckmittelsysteme, bei der ein am Stecker angeordnetes, radial wirkendes Halteelement umfasst ist.

Unter der Bezeichnung "Medienleitung" sind grundsätzlich Leitungsverbindungen für beliebige Strömungs- und/oder Druckmedien, wie Gase oder Flüssigkeiten, zu verstehen. Medienleitungen sind grundsätzlich Rohr- oder Schlauchleitungen sowie deren Anschluss- und Verbindungselemente, die Teil eines Systems zur Führung eines Mediums sind. Insbesondere sind derartige Medienleitungen aus Kunststoff hergestellt.

Die aus dem Stand der Technik bekannten Anschlussvorrichtungen weisen oftmals einen hohen Montageaufwand auf und/oder sind nicht zum Aufbringen der für Druckanwendungen erforderlichen Haltekräfte geeignet, was zu einer Beschädigung der Anschlussvorrichtung führen kann. Hinzu kommt, dass aus dem Stand der Technik bekannte Anschlussvorrichtungen anfällig für Fehlmontagen sind.

Der Erfindung liegt deshalb die Aufgabe zugrunde, eine Anschlussvorrichtung anzugeben, bei der der Aufwand zur Montage reduziert ist, mit der große Haltekräfte aufbringbar sind und die das Risiko von Fehlmontagen reduziert.

Die Aufgabe wird erfindungsgemäß durch die Merkmale des kennzeichnenden Teils des Anspruchs 1 gelöst, nämlich dadurch, dass das Einsatzteil in der Anschlussöffnung durch eine Drehung um einen vorbestimmten Winkel α um die Mittelachse der Anschlussöffnung, ausgehend von einer Einbringstellung in eine Verriegelungsstellung, an dem Kupplungselement befestigbar ist. Das an dem Einsatzteil angeordnete Dichtmittel weist zumindest abschnittsweise eine variierende axiale Lage in Bezug auf eine Mittelachse des Einsatzteils auf. Übliche Dichtungsringe, insbesondere deren Mittelachsen, sind üblicherweise in einer einzigen gedachten Ebene angeordnet, zu der die Mittelachse des zu dichtenden Bauteils eine Ebenennormale ist. In diesem Fall hat das Dichtmittel nach der vorliegenden Definition keine variierende axiale Lage, sondern eine konstante axiale Lage. Eine variierende axiale Lage bedeutet gemäß der vorliegenden Erfindung, dass sich das Dichtmittel auch zumindest teilweise entlang, jedenfalls mit Erstreckungsanteilen, parallel zur Mittelachse des Einsatzteils erstreckt.

Das Dichtmittel weist dabei mindestens einen ersten Abschnitt mit einer ersten axialen Lage auf. Das Dichtmittel gibt - aufgrund der relativen axialen Lage des ersten Abschnitts des Dichtmittels und der Leckagepfade entlang der Mittelachse der Anschlussöffnung bzw. des Einsatzteils in der Anschlussöffnung - mit dem ersten Abschnitt einen Leckagepfad frei, wenn der erste Abschnitt mit mindestens einer Leckageausnehmung überlappend angeordnet ist. Überlappend bedeutet dabei, dass der erste Abschnitt eine Leckageöffnung in Umfangsrichtung übertritt.

Die Leckageausnehmungen in der Anschlussöffnung und der erste Abschnitt des Dichtmittels an dem Einsatzteil sind derart aufeinander abgestimmt angeordnet, dass der erste Abschnitt in der Einbringstellung mit mindestens einer Leckageausnehmung der Anschlussöffnung überlappend angeordnet ist, so dass in dieser Stellung mindestens ein Leckagepfad freigegeben ist. Wird nun das Einsatzteil zur Herstellung einer formschlüssigen Verbindung mit dem Kupplungselement um einen vorbestimmten Winkel α um seine Mittelachse gedreht, wird auch der erste Abschnitt in der Verriegelungsstellung in einen Bereich zwischen zwei Leckageausnehmungen bewegt, so dass - trotz der axialen Lage des ersten Abschnitts - kein Leckagepfad freigegeben ist, also kein Fluid durch eine Leckageausnehmung nach außen treten kann. An der Tatsache, dass kein Fluid austritt, ist dann erkennbar, dass das Einsatzteil ordnungsgemäß verriegelt ist.

Das Dichtmittel erstreckt sich folglich entlang der Mittelachse des Einsatzteils mäanderförmig über den Umfang. Gemäß der vorliegenden Erfindung werden Leckagepfade zur Anzeige einer nicht vollständigen Montage folglich nicht durch die axiale Lage des Einsatzteils selbst beeinflusst, sondern durch die rotative Ausrichtung des Einsatzteils, insbesondere die Lage zumindest des ersten Abschnitts in Bezug auf die Leckageausnehmungen.

Erfindungsgemäß sind vielfältige Ausgestaltungen vorgesehen, wobei stets das Prinzip zugrunde liegt, dass die axiale Lage mindestens eines Abschnitts des Dichtmittels auf die axiale Lage der Leckageausnehmungen in der Anschlussöffnung in der Einbausituation des Einsatzteils derart abgestimmt ist, dass die rotative Ausrichtung des Einsatzteils die Lage des Dichtmittels zu den Leckageausnehmungen und damit das Versperren oder Freigeben von Leckagepfaden bestimmt.

Gemäß einer ersten Ausgestaltung der Anschlussvorrichtung ist vorgesehen, dass die Leckageausnehmungen in mindestens einem ersten Bereich eines Innenumfangs der Anschlussöffnung, insbesondere gleichmäßig, verteilt angeordnet sind, und dass in mindestens einem zweiten Bereich des Innenumfangs keine Leckageausnehmungen ausgebildet sind. Beispielsweise ist vorgesehen, dass bei über den Umfang, insbesondere gleichmäßig, verteilten Leckageausnehmungen beispielsweise zwei nebeneinanderliegende Leckageausnehmungen nicht ausgebildet sind, so dass auf dem Innenumfang in einer bestimmten axialen Lage der Leckageausnehmungen in der Anschlussöffnung ein leckagepfadfreier Bereich ausgebildet ist. Erfindungsgemäß ist dann vorgesehen, dass sich der erste Abschnitt des Dichtmittels in der Verriegelungsstellung genau in dem leckagepfadfreien Bereich befindet. Solange sich der erste Abschnitt im Bereich der Leckageausnehmungen befindet, ist stets mindestens ein Leckagepfad freigegeben. Erst wenn der erste Abschnitt in den leckagepfadfreien Bereich verschwenkt ist, sind sämtliche Leckagepfade verschlossen. Es ist auch vorgesehen, dass die Leckageausnehmungen im ersten Bereich unregelmäßig verteilt sind.

Beispielsweise ist alternativ dazu auch vorgesehen, dass die Leckageausnehmungen im ersten Bereich und im zweiten Bereich eine unterschiedliche Länge entlang der Mittelachse der Anschlussöffnung aufweisen. In Abhängigkeit von dem Verlauf der axialen Lage des Dichtmittels über den Umfang des Einsatzteils sind dabei entweder die Leckageausnehmungen im ersten Bereich oder die Leckageausnehmungen im zweiten Bereich in einer Richtung parallel zur Mittelachse der Anschlussöffnung, in Richtung der Öffnung der Anschlussöffnung oder dem Boden der Anschlussöffnung länger oder kürzer ausgebildet. Jedenfalls ist der Verlauf der axialen Lage des Dichtmittels über den Umfang des Einsatzteils so auf die längeren und/oder kürzeren Leckageausnehmungen abgestimmt, dass nur in der Verriegelungsstellung durch Rotation des Einsatzteils alle Leckagepfade geschlossen sind.

Als besonders vorteilhaft hat sich gemäß einer weiteren Ausgestaltung herausgestellt, wenn vorgesehen ist, dass der erste Abschnitt des Dichtmittels eine umfängliche Erstreckung aufweist, die gewährleistet, dass der erste Abschnitt im ersten Bereich des Innenumfangs stets mindestens zwei Leckageausnehmungen überlappt. Die umfängliche Erstreckung des Dichtmittels im ersten Abschnitt ist folglich auf den Abstand zwischen zwei Leckageausnehmungen am Innenumfang so abgestimmt, dass der erste Abschnitt im Bereich mit Leckageausnehmungen stets zwei nebeneinanderliegende Leckageausnehmungen überlappt. Dadurch ist sichergestellt, dass bei der Ausbildung eines Leckagepfades bzw. bei der Freigabe eines Leckagepfades stets ausreichend Fluid für eine insbesondere akustische Warnehmung austritt.

Gemäß einer weiteren Ausgestaltung der Anschlussvorrichtung ist vorgesehen, dass das Dichtmittel in einer gedachten Ebene E angeordnet ist, die in einem Winkel β zur Mittelachse des Einsatzteils geneigt ist, insbesondere in einem Winkel zwischen 15° und 45°. Das Dichtmittel, beispielsweise ein Dichtring, verläuft folglich schräg zur Mittelachse des Einsatzteils. Dadurch weist das Dichtmittel eine variierende axiale Lage in Bezug auf die Mittelachse des Einsatzteils auf. Vorzugsweise bildet dann ein Abschnitt des Dichtmittels, der näher in Richtung der Außenseite der Anschlussöffnung orientiert ist, den ersten Abschnitt, dessen axiale Lage entsprechend auf die axiale Lage der Leckageausnehmungen in der Anschlussöffnung abgestimmt ist.

Als vorteilhaft haben sich Neigungswinkel in Bezug auf die Mittelachse zwischen 15° und 45° herausgestellt. Je steiler der Neigungswinkel des Dichtmittels ist, desto geringer ist der Drehwinkel α, der erforderlich ist, um den ersten Abschnitt des Dichtmittels in einen leckagepfadfreien Bereich auf dem Umfang zu verschwenken.

Insbesondere im Zusammenhang mit diesem Ausführungsbeispiel der Anschlussvorrichtung haben sich Leckagepfade mit unterschiedlichen Längen, die über den Umfang entsprechend der Ausrichtung des Dichtmittels verteilt sind, als vorteilhaft herausgestellt. Beispielsweise sind die Leckageausnehmungen in dem Bereich kürzer ausgebildet, in dem sich in der Verriegelungsstellung der an nächsten in Richtung der Öffnung der Anschlussöffnung geneigte Abschnitt des Dichtmittels befindet. Vorzugsweise sind die Leckageausnehmungen ausgehend von einer gemeinsamen, unteren oder oberen, Basis unterschiedlich lang ausgebildet, beginnend mit mindestens einer kürzesten Leckageausnehmung, wobei über den Verlauf des Umfangs die Länge der nächstfolgenden Leckageausnehmung länger ist, als die der vorangehenden, endend mit mindestens einer längsten Leckageausnehmung. Ausgehend von der längsten Leckageausnehmung nimmt die Länge der nächstfolgenden Leckageausnehmung bis wieder hin zur mindestens einen kürzesten Leckageausnehmung über den Umfang stetig ab. In Abhängigkeit von der Ausrichtung des Dichtmittels am Umfang des Einsatzteils ist die gemeinsame Basis der unterschiedlich langen Leckageausnehmungen - die gemeinsame axiale Lage - oben, also näher zur Öffnung der Anschlussöffnung, oder unten, also näher zum Boden der Anschlussöffnung, angeordnet.

Gemäß einer alternativen Ausgestaltung der Anschlussvorrichtung ist vorgesehen, dass das Dichtmittel in dem ersten Abschnitt des Umfangs in einer gedachten Ebene F angeordnet ist, dass die Mittelachse des Einsatzteils eine Ebenennormale zur Ebene F ist, dass das Dichtmittel in einem zweiten Abschnitt des Umfangs in einer gedachten Ebene G angeordnet ist, dass die Ebene G parallel zur Ebene F ausgerichtet ist, und dass zwischen der Ebene F und der Ebene G mindestens zwei Verbindungsabschnitte des Dichtmittels ausgebildet sind. Ein erster Abschnitt des Dichtmittels verläuft folglich in der Ebene F, während ein Großteil des Dichtmittels in der Ebene G verläuft. Der erste Abschnitt ist folglich entlang der Mittelachse des Einsatzteils parallel versetzt zum zweiten Abschnitt angeordnet. Zwischen der Ebene G und der Ebene F vollzieht das Dichtmittel zwei Verbindungsabschnitte, in denen das Dichtmittel schräg zur Mittelachse verläuft.

Gemäß einer Ausgestaltung der Anschlussvorrichtung ist vorgesehen, dass das Dichtmittel mindestens eine Nut und mindestens einen Dichtungsring aufweist. Der Verlauf und die Lage des Dichtmittels wird vorzugsweise durch die Nut vorgegeben, die vorzugsweise im Einsatzteil ausgebildet ist. Bei dem Dichtungsring handelt es sich beispielsweise um einen handelsüblichen O-Ring, wodurch der Abstand der Ebenen F und G sowie der Neigungswinkel in den Verbindungsabschnitten durch die Verformbarkeit eines handelsüblichen O-Rings begrenzt wird. Beispielsweise ist auch vorgesehen, dass ein Dichtring an das Einsatzteil angeformt, insbesondere angespritzt, ist, so dass das Einsatzteil als Zweikomponentenbauteil ausgebildet ist. Insbesondere ist der Dichtring in der Nut angeformt.

Gemäß einer weiteren Ausgestaltung der Anschlussvorrichtung ist vorgesehen, dass das Einsatzteil mindestens einen Haltekragen aufweist, der sich über einen Teil des Umfangs des Einsatzteils erstreckt. Vorzugsweise erstreckt sich der Haltekragen beispielsweise über mindestens ein Viertel des Umfangs, bevorzugt über etwa die Hälfte des Umfangs des Einsatzteils. Beispielsweise ist mehr als ein Haltekragen vorgesehen, insbesondere sind mindestens zwei Haltekragen vorgesehen. Vorzugsweise sind zwei Haltekragen umfänglich gegenüberliegend angeordnet bzw. gleichmäßig auf dem Umfang verteilt angeordnet. Das Kupplungselement weist mindestens eine korrespondierende Haltenut auf, so dass der Haltekragen bei der Drehung um einen vorbestimmten Winkel α aus der Einbringstellung in die Verriegelungsstellung in die Haltenut bzw. die Haltenuten eingeschwenkt wird und somit in formschlüssigen Eingriff mit der Haltenut gebracht wird. Die Haltenut ist folglich in radialer Richtung an dem Kupplungselement ausgebildet und erstreckt sich betragsmäßig über den gleichen Umfangsbereich am Kupplungselement wie der Haltekragen am Einsatzteil. Bei mehr als einem Haltekragen sind eine entsprechende Anzahl an Haltenuten vorgesehen. Bei zwei Haltekragen sind zwei Haltenuten vorgesehen. Der Haltekragen und die Haltenut wirken folglich derart zusammen, dass nach der Drehung in die Verriegelungsstellung das Einsatzteil nicht mehr in einer Richtung parallel zur Mittelachse der Anschlussöffnung aus der Anschlussöffnung entfernt werden kann.

Insbesondere um festzustellen, ob das Einsatzteil ordnungsgemäß verriegelt ist, ist gemäß einer weiteren Ausgestaltung vorgesehen, dass der Haltekragen eine andere Farbe aufweist als der Rest des Einsatzteils. Wenn der Haltekragen beispielsweise rot ausgebildet ist, ist eine ordnungsgemäße Verriegelung dadurch erkennbar, dass keine roten Farbanteile mehr zu erkennen sind, da der Haltekragen vollständig in der Haltenut verschwunden ist. Vorzugsweise ist ferner vorgesehen, dass der Haltekragen aus einem anderen Material als der Rest des Einsatzteils ausgebildet ist, insbesondere einem andersfarbigen Material. Vorzugsweise ist der Haltekragen an das Einsatzteil angeformt bzw. angespritzt.

Vorzugsweise um das Einsatzteil in der Verriegelungsstellung zu sichern, ist gemäß einer weiteren Ausgestaltung vorgesehen, dass an dem Haltekragen mindestens ein in Radialrichtung orientiertes Rastmittel ausgebildet ist, insbesondere mindestens zwei in Radialrichtung ausgebildete Rastvorsprünge oder Rastarme, und dass das Rastmittel mit mindestens einem korrespondierenden Rastmittel, insbesondere mindestens einer Rastausnehmung, vorzugsweise zwei Rastausnehmungen an der Haltenut, zusammenwirkt, um eine Drehbewegung des Einsatzteils zurück in Richtung der Einbringstellung zu verhindern.

Vorzugsweise sind mindestens zwei Rastmittel am Haltekragen und mindestens zwei Rastmittel an der Haltenut vorgesehen. Während des Vorgangs des Drehens des Haltekragens aus der Einbringstellung in die Verriegelungsstellung verrastet zunächst ein erster Rastvorsprung mit einer ersten Rastausnehmung, wobei der Rastvorsprung so ausgebildet ist, dass er sich aus der ersten Rastausnehmung jedenfalls in Drehrichtung in Richtung der Verriegelungsstellung wieder entfernen lässt. In die entgegengesetzte Richtung bildet er eine Art Vorrastung. Anschließend wird das Einsatzteil weitergedreht bis zu einer Stellung, in der der erste Rastvorsprung mit einer zweiten Rastausnehmung und der zweite Rastvorsprung mit der ersten Rastausnehmung verrastet. In dieser Position ist das Einsatzteil in der Verriegelungsstellung. Eine Freigabe kann dadurch erfolgen, dass die Rastvorsprünge bzw. die Rastarme durch manuelles Einwirken aus dem formschlüssigen Eingriff in den Rastausnehmungen gelöst werden.

Insbesondere um die Montage der Anschlussvorrichtung zu vereinfachen, ist gemäß einer weiteren Ausgestaltung vorgesehen, dass das Einsatzteil mindestens ein Montageprofil, insbesondere eine Montagekrone aufweist. Vorzugsweise ist das Montageprofil an der zweiten Endseite, die im Montagezustand aus der Anschlussöffnung herausragt, angeordnet. Das Montageprofil dient dem Eingriff eines Werkzeuges, um das Einsatzteil in der Anschlussöffnung zu drehen. Beispielsweise kann das Montageprofil auch zum Ausbilden einer Verdrehsicherung für einen in das Einsatzteil eingebrachten Steckverbinder dienen. Vorzugsweise ist das Montageprofil als Montagekrone mit in einem Kragen gleichmäßig über den Umfang verteilten Schlitzen ausgebildet, so dass mit einem einfachen Nutenschlüssel in die Montagekrone eingegriffen und das Einsatzteil gedreht werden kann.

Gemäß einer weiteren Ausgestaltung ist zudem vorgesehen, dass am Haltekragen mindestens ein Anschlag ausgebildet ist, der mit dem Kupplungselement in der Verriegelungsstellung zusammenwirkt und eine Drehung des Einsatzteils begrenzt.

Gemäß einer alternativen Ausgestaltung der Anschlussvorrichtung ist vorgesehen, dass das Kupplungselement eine Mehrzahl die Aufnahmeöffnung umgebender, insbesondere in radialer Richtung angeordneter bzw. sich in radialer Richtung erstreckender Verriegelungsmittel, bevorzugt sechs Verriegelungsmittel, aufweist. Die Verriegelungsmittel sind vorzugsweise als abgerundete Verriegelungsvorsprünge ausgebildet und weisen in Draufsicht das Grundprofil eines Sechskants auf. Korrespondierend dazu weist das Einsatzteil eine Mehrzahl von Gegenverriegelungsmitteln, insbesondere sechs Gegenverriegelungsmittel, auf. Die Gegenverriegelungsmittel sind in der Einbringstellung in axialer Richtung an den Verriegelungsmitteln vorbeiführbar, wobei die Gegenverriegelungsmittel durch Drehung des Einsatzteils um einen vorbestimmten Winkel aus der Einbringstellung in Richtung der Verriegelungsstellung um die Mittelachse des Einsatzteils relativ zu den Verriegelungsmitteln bewegt werden und dadurch formschlüssig mit den Verriegelungsmitteln zusammenwirken, so dass das Einsatzteil nicht mehr in einer Richtung parallel zur Mittelachse des Einsatzteils aus der Anschlussöffnung entnehmbar ist. Die Gegenverriegelungsmittel sind vorzugsweise als Gegenverriegelungsvorsprünge ausgebildet.

Bei diesem Ausführungsbeispiel erfolgt die Verriegelung zwischen Einsatzteil und Kupplungselement folglich auf einem Außenumfang, der die Anschlussöffnung umgibt. Vorzugsweise erstrecken sich die Verriegelungsmittel radial nach außen, während sich die Gegenverriegelungsmittel am Einsatzteil radial nach innen erstrecken. Nach dem Einbringen des Einsatzteils in axialer Richtung, also parallel zur Mittelachse der Anschlussöffnung, wobei die Verriegelungs- und Gegenverriegelungsmittel in axialer Richtung aneinander vorbeigeführt werden, erfolgt das Verriegeln durch Drehung des Einsatzteils relativ zum Kupplungselement, wobei die Gegenverriegelungsmittel jeweils zumindest teilweise unter ein korrespondierendes Verriegelungsmittel gedreht werden und eine formschlüssige Verriegelung, insbesondere in einer Richtung parallel zur Mittelachse der Anschlussöffnung, erfolgt.

Insbesondere um zu verhindern, dass sich das Einsatzteil aus der Verriegelungsstellung wieder in Richtung der Einbringstellung dreht, ist gemäß einer weiteren Ausgestaltung der Anschlussvorrichtung vorgesehen, dass das Einsatzteil mindestens ein Rastmittel aufweist, und dass das Rastmittel in der Verriegelungsstellung eine Drehung des Einsatzteils in Richtung der Einbringstellung verhindert, indem das Rastmittel mit mindestens einem der Verriegelungsmittel des Kupplungselementes, insbesondere kraftformschlüssig, zusammenwirkt. Beim Einbringen des Einsatzteils wird das Rastmittel vorzugsweise in einen Bereich zwischen zwei Verriegelungsmitteln des Kupplungselementes eingebracht. Bei der Drehung des Einsatzteils überwandert das Rastmittel vorzugsweise eine radial bzw. umfänglich gerichtete Fläche eines Verriegelungsmittels, insbesondere eines Verriegelungsvorsprungs, und verrastet, vorzugsweise kraftformschlüssig, mit einer radial bzw. umfänglich gerichteten Verriegelungsfläche eines der Verriegelungsmittel. Während die Gegenverriegelungsmittel und die Verriegelungsmittel zur Festlegung des Einsatzteils in der Anschlussöffnung mit in axialer Richtung ausgerichteten Flächen zusammenwirken, wirkt das Rastmittel mit in Umfangsrichtung ausgerichteten Flächen zusammen.

Als besonders vorteilhaft hat sich gemäß einer weiteren Ausgestaltung herausgestellt, wenn vorgesehen ist, dass das Einsatzteil mindestens zwei Rastmittel aufweist, insbesondere dass die Rastmittel als federelastische Rastarme ausgebildet sind, bevorzugt dass die Rastarme zumindest teilweise, insbesondere radial, nach innen gebogen sind. Die Rastmittel sind insbesondere als federelastische Rastarme ausgebildet, die in Umfangsrichtung bzw. in radialer Richtung elastisch bewegbar sind. Bei der Drehung des Einsatzteils aus der Einbringstellung in die Verriegelungsstellung können die Rastarme daher dem in Drehrichtung nächstliegenden Verriegelungsmittel, insbesondere Verriegelungsvorsprung, ausweichen, diesen überwandern und anschließend an einer Verriegelungsfläche mit diesem verrasten. Ferner ist vorgesehen, dass die Rastarme nach innen gebogen sind.

Ferner ist vorgesehen, dass das Einsatzteil gemäß einer weiteren Ausgestaltung einen Anschlag aufweist, der mit mindestens einem Verriegelungsmittel, insbesondere einem Verriegelungsvorsprung, am Kupplungselement zusammenwirkt und die Drehung in der Verriegelungsstellung zu beenden. Vorzugsweise wird durch den mindestens einen Anschlag, insbesondere zwei oder mehr Anschläge, die Verriegelungsstellung des Einsatzteils definiert. Vorzugsweise ist der Anschlag bzw. sind die Anschläge so angeordnet, dass an einer in Umfangsrichtung ausgerichteten Fläche eines Verriegelungsmittels bzw. eines Verriegelungsvorsprungs der Anschlag anliegt, während an einer weiteren in Umfangsrichtung ausgerichteten Fläche, insbesondere gegenüberliegenden Fläche, der Rastarm anliegt, so dass das Einsatzteil in beide Drehrichtungen festgelegt ist.

Ein weiteres Ausführungsbeispiel der Anschlussvorrichtung sieht vor, dass das Einsatzteil das Kupplungselement im Bereich der Anschlussöffnung zumindest teilweise übergreift. Da die Verriegelung auf einem Außenumfang erfolgt, hat sich das Übergreifen als vorteilhaft herausgestellt. Das Einsatzteil weist dazu vorzugsweise einen Kragen auf. Auf einem Innenumfang des Kragens sind vorzugsweise die Gegenverriegelungsmittel angeordnet und erstrecken sich nach innen.

Gemäß einer weiteren Ausgestaltung der Anschlussvorrichtung hat sich als vorteilhaft herausgestellt, wenn vorgesehen ist, dass das Einsatzteil mindestens einen, insbesondere hülsenartigen, Einsatzteilgrundkörper aufweist, dass der Einsatzteilgrundkörper an einer ersten Endseite mindestens zwei, ausgehend vom Einsatzteilgrundkörper in Längsrichtung ausgebildete, insbesondere radial flexible, Haltearme aufweist, so dass ein Verbindungsbereich als Steckeraufnahme zum Zusammenwirken mit einem Anschlussstecker einer Medienleitung ausgebildet ist, insbesondere dass an den Haltearmen jeweils mindestens ein Rastvorsprung ausgebildet ist.

Das Einsatzteil wird innerhalb der Anschlussöffnung fest mit dem Kupplungselement verbunden und definiert einen Verbindungsbereich bzw. eine Verbindungsschnittstelle für eine Medienleitung, beispielweise eine Aufnahme für einen Verbindungsstecker. Das Einsatzteil wird in der Anschlussvorrichtung montiert, so dass das Einsatzteil und der von dem Einsatzteil ausgebildete Verbindungsbereich als Adapter für einen Anschlussstecker in der Anschlussöffnung angeordnet sind. Ein in den Verbindungsbereich eingebrachter Anschlussstecker verrastet vorzugsweise mit den Rastvorsprüngen an den Haltearmen.

Als besonders vorteilhaft hat sich gemäß einer weiteren Ausgestaltung herausgestellt, wenn vorgesehen ist, dass mehr als zwei Haltearme ausgebildet sind, und dass die Rastvorsprünge an den Haltearmen unterschiedliche Abstände in Längsrichtung zur ersten Endseite aufweisen. In Abhängigkeit von der Raststufe - Vorraststufe, Vollraststufe - für einen Anschlussstecker sind vorzugsweise Rastvorsprünge mit zwei unterschiedlichen Abständen, nämlich mit einem kürzeren und mit einem größeren Abstand zur ersten Endseite angeordnet. Beispielsweise sind drei Haltearme mit Rastvorsprüngen mit einem kürzeren Abstand und sechs Haltearme mit Rastvorsprüngen mit einem größeren Abstand ausgebildet. Die Rastvorsprünge mit dem ersten, kürzeren Abstand dienen der Realisierung einer Vorraststufe, während die Rastvorsprünge mit dem größeren Abstand zur ersten Endseite die Vollraststufe realisieren, in der der Einsatz erfolgt. Die Vorraststufe dient dem Anzeigen nicht vollständigen Steckvorganges mit definierter Leckage durch die freigegebenen Leckagepfade.

Insbesondere um eine Beschädigung der Haltearme zu verhindern, ist gemäß einer weiteren Ausgestaltung vorgesehen, dass an mindestens einem Haltearm radial außenseitig ein Stützelement angeordnet ist, und dass die radiale Bewegbarkeit des Haltearms durch die Abstützung über das Stützelement begrenzbar ist, insbesondere dass das Stützelement etwa auf einem Drittel oder der Hälfte der Länge des Haltearms angeordnet ist, bevorzugt dass die Haltearme ein Stützelement aufweisen, deren Rastvorsprünge am weitesten von der ersten Endseite entfernt sind. Die Stützelemente dienen der Begrenzung der radialen Bewegbarkeit der Haltearme, insbesondere um eine Beschädigung der Haltearme bei anliegendem Betriebsdruck zu verhindern. Dabei wird das Biegeverhalten der Rastarme unter Betriebsdruck durch das Vorhandensein der Stützelemente beeinflusst. Vorzugsweise erstreckt sich ein Stützelement über die Hälfte der Breite eines Haltearms, insbesondere über die gesamte Breite eines Haltearms.

Um die Flexibilität der Haltearme zu erhöhen, ist gemäß einer weiteren Ausgestaltung vorgesehen, dass mindestens ein Haltearm in einem Anschlussbereich an dem Einsatzteilgrundkörper ausgespart ist bzw. eine Aussparung aufweist, um die radiale Bewegbarkeit zu steigern. Der Haltearm weist dazu beispielsweise über seine gesamte umfängliche Erstreckung eine etwa halbschalenförmige Aussparung auf, die die Materialdicke des Haltearms verringert und dadurch die Flexibilität steigert.

In einer weiteren Ausgestaltung der Anschlussvorrichtung ist vorgesehen, dass der vorbestimmte Winkel, um den das Einsatzteil innerhalb der Anschlussöffnung gedreht wird, um in die Verriegelungsstellung zu gelangen, mindestens 30°, insbesondere mindestens 40°, vorzugsweise mindestens 90°, besonders bevorzugt mindestens 180° beträgt. Die Größe des Winkels ist auch maßgeblich von der Geometrie des Dichtmittels abhängig, damit gewährleistet wird, dass der erste Abschnitt des Dichtmittels in einen leckagepfadfreien Bereich gedreht wird.

Es ist ferner ein Einsatzteil für eine zuvor beschriebene Anschlussvorrichtung mit den vorstehend beschriebenen Eigenschaften offenbart. Insbesondere umfasst die Offenbarung ein Einsatzteil, das dadurch gekennzeichnet ist, dass das Dichtmittel mit dem ersten Abschnitt in einer gedachten Ebene angeordnet ist, dass die Mittelachse A des Einsatzteils eine Ebenennormale zur Ebene F ist, dass das Dichtmittel in einem zweiten Abschnitt in einer gedachten Ebene angeordnet ist, dass die Ebene F parallel zur Ebene G ausgerichtet ist, und dass zwischen der Ebene F und der Ebene G mindestens zwei Verbindungsabschnitte des Dichtmittels ausgebildet sind und/oder dass das Dichtmittel mindestens eine Nut und mindestens einen Dichtungsring aufweist, insbesondere dass der Dichtungsring in die Nut angeformt ist und/oder dass der Haltekragen eine von der Farbe des Einsatzteils abweichende Farbe aufweist, insbesondere aus einem anderen Material ausgebildet ist und/oder dass an dem Haltekragen mindestens ein in Radialrichtung orientiertes Rastmittel ausgebildet ist, insbesondere mindestens zwei in Radialrichtung ausgebildete Rastarme, und dass das Rastmittel mit mindestens einem korrespondierenden Rastmittel, insbesondere mindestens einer Rastausnehmung, bevorzugt zwei Rastausnehmungen, an der Haltenut zusammenwirkt, um eine Drehbewegung des Einsatzteils zurück in Richtung der Einbringstellung zu verhindern und/oder dass das Einsatzteil mindestens ein Montageprofil, insbesondere eine Montagekrone, aufweist und/oder dass am Haltekragen mindestens ein Anschlag vorgesehen ist, der mit dem Kupplungselement zusammenwirkt und die Drehung des Einsatzteils begrenzt und/oder dass das Einsatzteil mindestens ein Rastmittel aufweist, und dass das Rastmittel in der Verriegelungsstellung eine Drehung des Einsatzteils in Richtung der Einbringstellung verhindert, indem das Rastmittel mit mindestens einem Verriegelungsmittel des Kupplungselements, insbesondere kraftformschlüssig, zusammenwirkt und/oder dass das Einsatzteil mindestens zwei Rastmittel aufweist, insbesondere dass die Rastmittel als federelastische Rastarme ausgebildet sind, bevorzugt dass die Rastarme zumindest teilweise radial nach innen gebogen sind das Einsatzteil mindestens einen Anschlag aufweist, der mit mindestens einem Verriegelungsmittel am Kupplungselement zusammenwirkt und die Drehung begrenzt und/oder dass das Einsatzteil das Kupplungselement im Bereich der Anschlussöffnung zumindest teilweise übergreift und/oder dass das Einsatzteil mindestens einen, insbesondere hülsenartigen, Einsatzteilgrundkörper aufweist, dass der Einsatzteilgrundkörper an einer ersten Endseite mindestens zwei ausgehend vom Einsatzteilgrundkörper in Längsrichtung ausgebildete, insbesondere radial flexible, Haltearme aufweist, so dass ein Verbindungsbereich als Steckeraufnahme zum Zusammenwirken mit einem Anschlussstecker einer Medienleitung ausgebildet ist, insbesondere dass an den Haltearmen jeweils mindestens ein Rastvorsprung ausgebildet ist und/oder dass mehr als zwei Haltearme ausgebildet sind, und dass die Rastvorsprünge an den Haltearmen unterschiedliche Abstände in Längsrichtung zu der ersten Endseite aufweisen und/oder dass an mindestens einem Haltearm radial außenseitig ein Stützelement angeordnet ist, und dass die radiale Bewegbarkeit des Haltearms durch Abstützung über das Stützelement begrenzbar ist, insbesondere dass das Stützelement etwa auf einem Drittel oder der Hälfte der Länge des Haltearms angeordnet ist, bevorzugt dass die Haltearme ein Stützelement aufweisen, deren Rastvorsprünge am weitesten von der ersten Endseite entfernt sind und/oder dass mindestens ein Haltearm in einem Anschlussbereich an dem Einsatzteilgrundkörper ausgespart ist, um die radiale Bewegbarkeit zu steigern.

Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel einer Anschlussvorrichtung in perspektivischer Ansicht,
- Fig. 2a, 2b: ein Ausführungsbeispiel eines Einsatzteils in perspektivischer Ansicht,
- Fig. 3: ein Ausführungsbeispiel eines Kupplungselementes in perspektivischer Ansicht,
- Fig. 4: ein Ausführungsbeispiel einer Anschlussvorrichtung im Längsschn itt,
- Fig. 5: ein Ausführungsbeispiel einer Anschlussvorrichtung in Schnittansicht,
- Fig. 6: ein Ausführungsbeispiel einer Anschlussvorrichtung in perspektivischer Ansicht,
- Fig. 7a, 7b: ein Ausführungsbeispiel einer Anschlussvorrichtung in Draufsicht,
- Fig. 8: ein Ausführungsbeispiel einer Anschlussvorrichtung in Schnittansicht,
- Fig. 9a, 9b: ein Ausführungsbeispiel eines Einsatzteils in perspektivischer Ansicht,
- Fig. 10: ein Ausführungsbeispiel einer Anschlussvorrichtung in Schnittansicht,
- Fig. 11: ein Ausführungsbeispiel einer Anschlussvorrichtung in teilweise geschnittener Ansicht,
- Fig. 12: ein Ausführungsbeispiel eines Kupplungselementes in perspektivischer Ansicht,
- Fig. 13: ein Ausführungsbeispiel eines Einsatzteils in perspektivischer Ansicht, und
- Fig. 14: ein Ausführungsbeispiel eines Einsatzteils in einem Kupplungselement gemäß Fig. 12 und Fig. 13 in Schnittansicht.

In den verschiedenen Figuren der Zeichnung sind gleiche Teile stets mit denselben Bezugszeichen versehen.

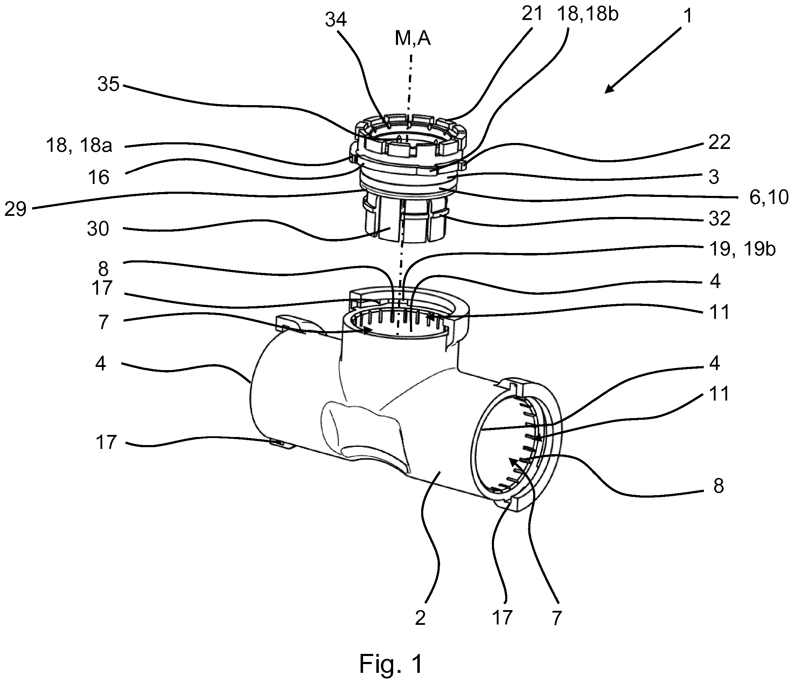

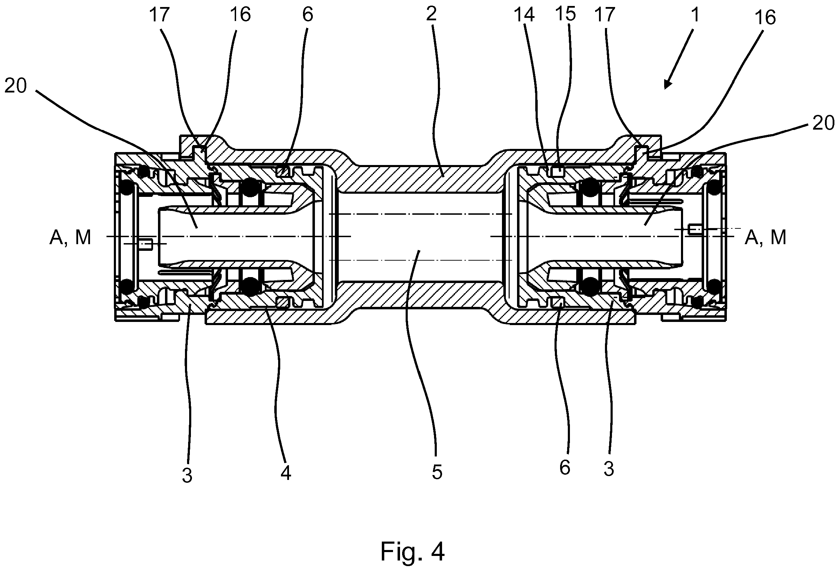

Fig. 1 zeigt ein Ausführungsbeispiel einer Anschlussvorrichtung 1 für Medienleitungen. Die Anschlussvorrichtung 1 weist mindestens ein Kupplungselement 2, mindestens ein Einsatzteil 3 und mindestens eine Anschlussöffnung 4 auf. Bei diesem Ausführungsbeispiel weist das Kupplungselement 2 drei Anschlussöffnungen 4 auf. Die Anschlussöffnungen 4 stehen fluidtechnisch mit einem Fluidkanal 5 in Verbindung, der beispielhaft in den Fig. 4, 5, 8, 10 und 11 dargestellt ist.

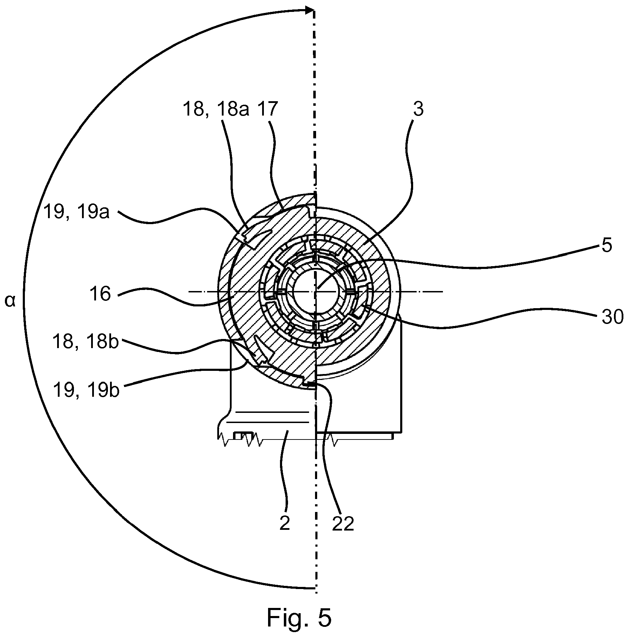

Das Einsatzteil 3 ist zumindest teilweise in eine Anschlussöffnung 4 einbringbar. Das Einsatzteil 3 weist mindestens ein das Einsatzteil 3 umfänglich umgebendes Dichtmittel 6 auf. Die Anschlussöffnung 4 weist auf einem Innenumfang 7 eine Mehrzahl von Leckageausnehmungen 8 auf, die in einer axialen Lage angeordnet sind. Das Einsatzteil 3 befindet sich gemäß Fig. 1 in einer Einbringstellung und kann entlang der Mittelachse M der Anschlussöffnung 4 in die Anschlussöffnung 4 eingebracht werden. Sobald das Einsatzteil 3 in die Anschlussöffnung 4 eingebracht ist, kann es um einen vorbestimmten Winkel α um die Mittelachse M der Anschlussöffnung 4, der bei diesem Ausführungsbeispiel 180° beträgt, in eine Verriegelungsstellung gedreht werden, wobei das Einsatzteil 3 in der Verriegelungsstellung in der Anschlussöffnung 4 formschlüssig verriegelt ist. Die Verriegelungsstellung ist beispielhaft bei den Ausführungsbeispielen der Fig. 4 und 5 dargestellt.

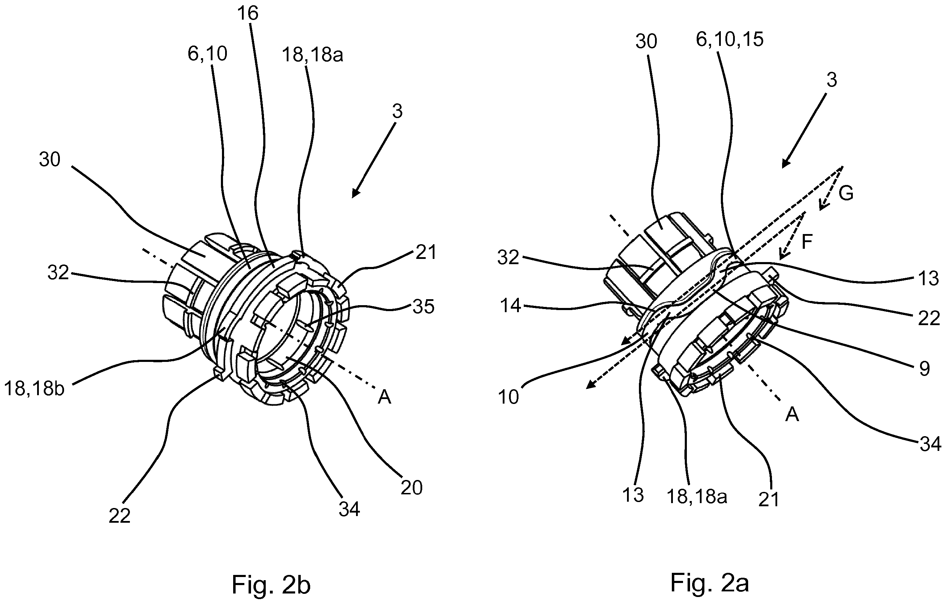

Fig. 2a und 2b zeigen ein Ausführungsbeispiel eines Einsatzteils 3 für eine Anschlussvorrichtung 1 gemäß Fig. 1, wobei das Einsatzteil 3, insbesondere gemäß Fig. 2a ein Dichtmittel 6 aufweist, das eine zumindest abschnittsweise variierende axiale Lage entlang der Mittelachse A des Einsatzteils 3 aufweist. Bei dem dargestellten Ausführungsbeispiel weist das Dichtmittel 6 einen ersten Abschnitt 9 mit einer ersten axialen Lage und einen zweiten Abschnitt 10 mit einer zweiten axialen Lage in Bezug auf die Mittelachse A des Einsatzteils 3 auf. Mit axialer Lage ist die Anordnung des Dichtmittels 6 in Bezug auf die Längserstreckung der Mittelachse A gemeint.

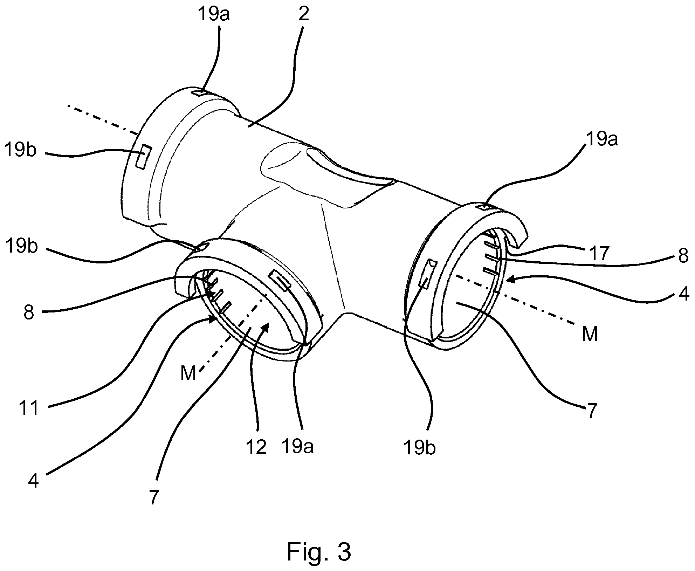

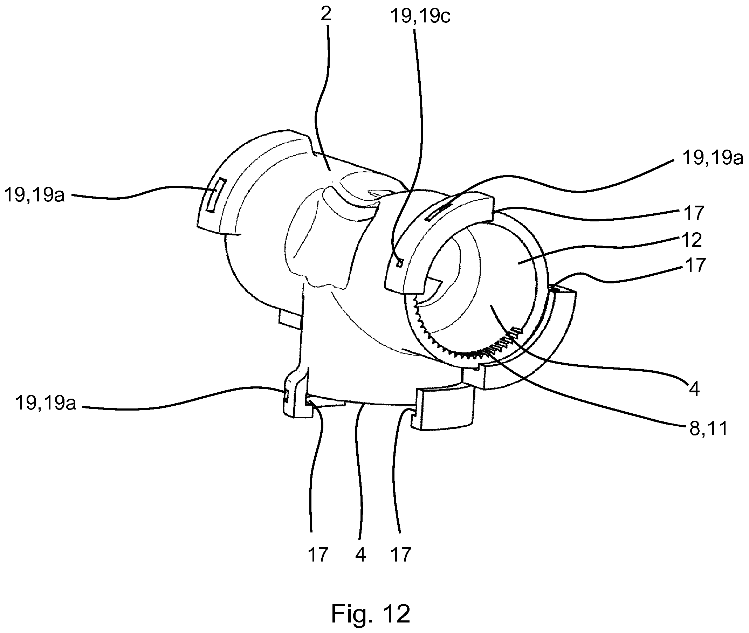

In der Einbringstellung gemäß Fig. 1 ist dieser erste Abschnitt 9 so angeordnet, dass er eine Mehrzahl von Leckageausnehmungen 8 am Innenumfang 7 der Anschlussöffnung 4 überlagert, so dass eine Mehrzahl an Leckagepfaden ausgebildet ist. Wird nun dieser erste Abschnitt 9 durch die Drehung des Einsatzteils 3 um 180° rotativ so ausgerichtet, dass er keine Leckageausnehmungen 8 mehr überdeckt und ist dann der zweite Abschnitt 10 im Bereich der Leckageausnehmungen 8 angeordnet, ist kein Leckagepfad mehr freigegeben. Gemäß Fig. 1 sind die Leckageausnehmungen 8 in einem ersten Bereich 11 gleichmäßig und regelmäßig zueinander beabstandet angeordnet. Aus Fig. 3 und Fig. 12 ist zu entnehmen, dass in einem zweiten Bereich 12 keine Leckageausnehmungen ausgebildet sind, so dass der erste Abschnitt 9 des Dichtmittels 6 sich in der Verriegelungsstellung im zweiten Bereich 12 des Innenumfangs 7 befindet. Der erste Abschnitt 9 weist eine umfängliche Erstreckung auf, die gewährleistet, dass der erste Abschnitt 9 im ersten Bereich 11 des Innenumfangs 7 mindestens zwei Leckageausnehmungen 8 überlappt.

Fig. 2a zeigt, dass das Dichtmittel 6 in dem ersten Abschnitt 9 in einer gedachten Ebene F und der zweite Abschnitt 10 des Dichtmittels 6 in einer gedachten Ebene G angeordnet ist, insbesondere jeweils mit der Mittelachse des Dichtmittels 6. Die Ebenen F und G sind so angeordnet, dass die Mittelachse A des Einsatzteils 3 eine Ebenennormale zu beiden Ebenen ist. Zwischen der Ebene F und der Ebene G verläuft das Dichtmittel 6 in Verbindungsabschnitten 13, die sich schräg zwischen den Ebenen F und G erstrecken. Gemäß allen dargestellten Ausführungsbeispielen weist das Dichtmittel 6 mindestens eine Nut 14 und einen Dichtungsring 15 auf. Der erste Abschnitt 9 und der zweite Abschnitt 10 verlaufen folglich parallel zueinander verschoben.

Gemäß Fig. 1, 2, 4 und 5 weist das Einsatzteil 3 einen Haltekragen 16 auf, der sich über etwa 180°, also über die Hälfte des Umfangs des Einsatzteils 3, erstreckt. Das Kupplungselement 2 weist gemäß Fig. 1, 3, 4 und 5 eine korrespondierende Haltenut 17 auf, in die der Haltekragen 16 bei der Drehung aus der Einbringstellung in die Verriegelungsstellung eingeschränkt wird, so dass sich die Haltenut 17 im formschlüssigen Eingriff mit dem Haltekragen 16 befindet. An dem Haltekragen 16 ist ein in Radialrichtung orientiertes Rastmittel 18, nämlich bei den Ausführungsbeispielen der Fig. 1, 2, 5 und 14 zwei in Radialrichtung ausgebildete Rastarme 18a, 18b, ausgebildet.

In der Verriegelungsstellung gemäß Fig. 5 wirken beide Rastarme 18a, 18b mit einem korrespondierenden Rastmittel 19, nämlich zwei Rastausnehmungen 19a und 19b, zusammen, so dass eine Drehbewegung des Einsatzteils 3 zurück in Richtung der Einbringstellung verhindert wird. Das Einsatzteil 3 kann erst dann zurückgedreht werden, wenn die Rastarme 18a, 18b aus ihrer Verriegelung mit den Rastausnehmungen 19a, 19b manuell gelöst werden.

Ausgehend von der Einbringstellung, ausgehend von Fig. 1, wird das Einsatzteil 3 gedreht, so dass nach einer Drehung von etwa 90° zunächst der erste Rastarm 18a mit der zweiten Rastausnehmung 19b verrastet. In dieser Vorraststellung ist bereits der erste Abschnitt 9 des Dichtmittels 6 zumindest teilweise im leckagefreien Bereich angeordnet, so dass die Anschlussvorrichtung 1 betriebsbereit wäre, also ausreichende Haltekräfte aufgebracht würden, aber gleichwohl die Leckage akustisch angezeigt wird. Das Einsatzteil wird dann um weitere 90° gedreht, so dass in der Verriegelungsstellung gemäß Fig. 5 der erste Rastarm 18a mit der ersten Raustausnehmung 19a und der zweite Rastarm 18b mit der zweiten Rastausnehmung 19b formschlüssig zusammenwirkt.

Das Ausführungsbeispiel einer Kupplungsvorrichtung gemäß Fig. 1 und Fig. 4 ist aufgrund seiner Gestaltung bei der Herstellung in einer Richtung entformbar.

Fig. 4 zeigt ein Ausführungsbeispiel einer Anschlussvorrichtung 1 mit zwei, in zwei gegenüberliegende Anschlussöffnungen 4 eingebrachten Einsatzteilen 3. Der Verbindungsbereich 20 der Einsatzteile 3 ist hier zur Aufnahme einer Medienleitung, insbesondere eines Rohres, ausgebildet. Der Haltekragen 16 befindet sich vollständig im formschlüssigen Eingriff in der Haltenut 17. Die beiden Anschlussöffnungen 4 sind über den Fluidkanal 5 miteinander verbunden.

Gemäß Fig. 1, 2 und 5 weist das Einsatzteil 3 ein Montageprofil 21 auf, das bei diesem Ausführungsbeispiel als Montagekrone ausgebildet ist, die zur Aufnahme eines Nutenschlüssels geeignet ist, so dass das Einsatzteil 3 in der Anschlussöffnung 4 gedreht werden kann. Ferner kann das Montageprofil 21 zum Zwecke der Verdrehsicherung für einen in den Verbindungsbereich 20 des Einsatzteils 3 eingebrachten Verbindungsstecker - nicht dargestellt - verwendet werden.

Gemäß Fig. 1, 2 und 5 weist das Einsatzteil 3 ferner einen Anschlag 22 auf, der dazu dient, die Verriegelungsstellung zu definieren und ein Weiterdrehen des Einsatzteils 3 in der Anschlussöffnung 4 zu verhindern, siehe insbesondere Fig. 5.

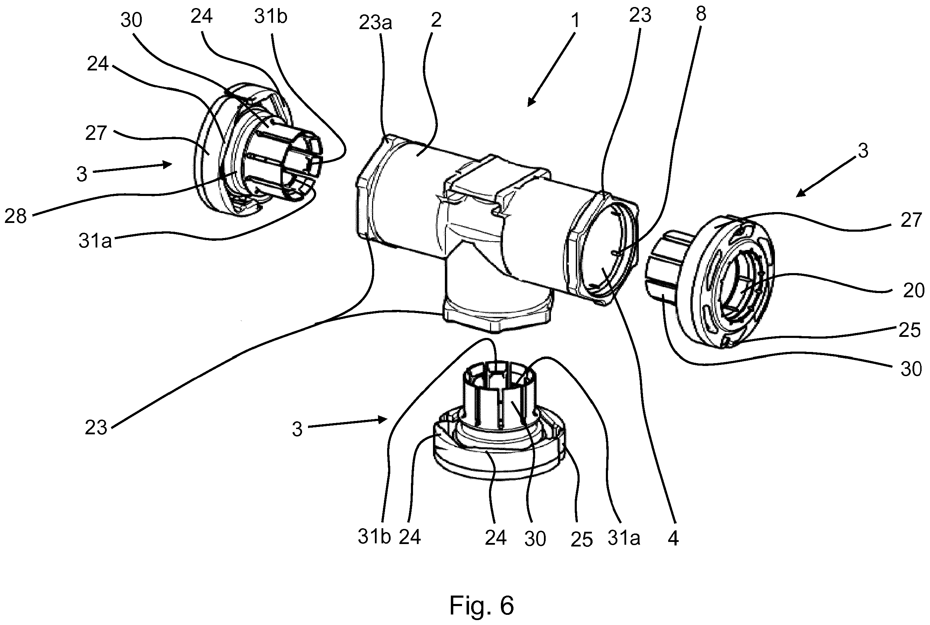

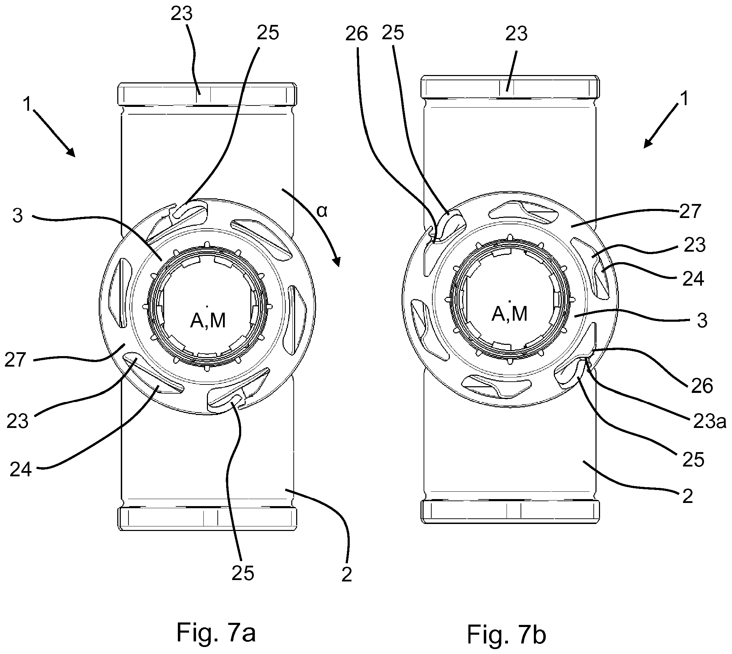

Fig. 6 bis Fig. 11 zeigen Ausführungsbeispiele einer alternativen Form der Anschlussvorrichtung 1. Insbesondere gemäß Fig. 6, 8, 10 und 11 weist das Kupplungselement 2 eine Mehrzahl die Anschlussöffnung 4 umgebender und in radialer Richtung angeordneter Verriegelungsmittel auf, die bei diesem Ausführungsbeispiel als Verriegelungsvorsprünge 23 ausgebildet sind. Insbesondere weist das Kupplungselement 2 sechs Verriegelungsvorsprünge 23 auf. Das Einsatzteil 3 weist gemäß Fig. 6, Fig. 7a, 7b, Fig. 8, Fig. 9a, 9b und Fig. 10 zu den Verriegelungsvorsprüngen 23 korrespondierende Gegenverriegelungsvorsprünge 24 auf, die in der Verriegelungsstellung gemäß Fig. 7b, 8 und 10 die Verriegelungsvorsprünge 23 des Kupplungselementes 2 formschlüssig untergreifen und so das Einsatzteil 3 in der Anschlussöffnung 4 verriegeln.

Fig. 7a zeigt ein Ausführungsbeispiel einer Anschlussvorrichtung 1 in der Einbringstellung, in der die Verriegelungsvorsprünge 23 in axialer Richtung an den Gegenverriegelungsvorsprüngen 24 vorbeitreten können, damit das Einsatzteil 3 zumindest teilweise in die Anschlussöffnung 4 eintreten kann. Fig. 7b zeigt das gleiche Ausführungsbeispiel wie Fig. 7a, jedoch in Verriegelungsstellung, in der die Verriegelungsvorsprünge 23 mit den Gegenverriegelungsvorsprüngen 24 formschlüssig zusammenwirken. Das Einsatzteil 3 ist zur Erreichung der Verriegelungsstellung um etwa 30° gedreht worden, allerdings gegenüber Fig. 7a aus einer anderen Einbringstellung. Das Einsatzteil 3 weist gemäß Fig. 7a und 7b ferner ein Rastmittel auf, das bei diesem Ausführungsbeispiel als zwei gegenüberliegend angeordnete, nach innen gebogene, federelastische Rastarme 25 ausgebildet ist.

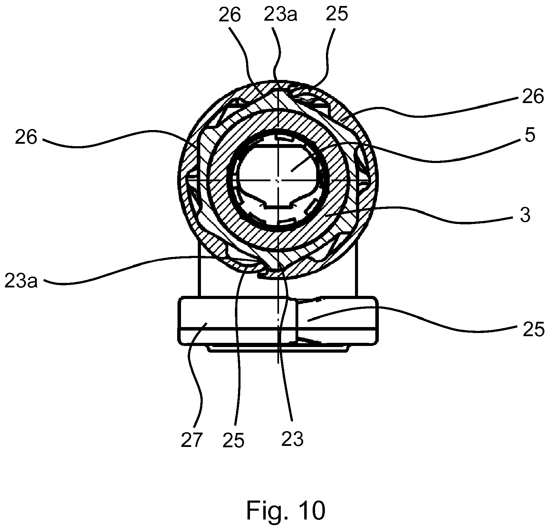

Gemäß Fig. 7a werden die Rastarme 25 in der Einbringstellung an den Verriegelungsvorsprüngen 23 vorbeigeführt. Jeder Rastarm 25 weicht dann bei einer Drehung des Einsatzteils 3 um den Winkel α dem in Drehrichtung nächstfolgenden Verriegelungsvorsprung 23 des Kupplungselementes 2 elastisch aus, so dass die Rastarme 25 in der Verriegelungsstellung gemäß Fig. 7b wieder in ihre Ausgangsposition zurückkehren und in dieser kraftformschlüssig mit einer Verriegelungsfläche 23a, die umfangsmäßig nach außen gerichtet ist, des jeweiligen Verriegelungsvorsprungs 23 so zusammenwirken, dass das Einsatzteil 3 nicht wieder in Richtung der Einbringstellung gedreht werden kann. Gemäß Fig. 10 verhindern Anschläge 26, dass das Einsatzteil 3 weitergedreht wird.

Gemäß Fig. 6, 7a, 7b, 8, 9a, 9b und 11 weist das Einsatzteil 3 einen Kragen 27 auf, der das Kupplungselement 2 im Bereich der Anschlussöffnung 4 zumindest teilweise übergreift und an dessen Innenumfang die Gegenverriegelungsvorsprünge 24 angeordnet sind.

Gemäß Fig. 6, 8, 9a, 9b und 11 weist das Einsatzteil 3 mindestens einen hülsenartigen Einsatzteilgrundkörper 28 auf, an dem der Kragen 27 angeordnet ist. An einer ersten Endseite 29 weist der Einsatzteilgrundkörper 28 eine Mehrzahl von in Längsrichtung ausgebildeten, radial flexiblen Haltearmen 30 auf, die den Verbindungsbereich 20 für einen - nicht dargestellten - Anschlussstecker ausbilden. An den Haltearmen 30 ist jeweils mindestens ein Rastvorsprung 31 ausgebildet, wobei Rastvorsprünge erster Art 31a einen geringeren Abstand zur ersten Endseite 29 und Rastvorsprünge zweiter Art 31b einen größeren Abstand zur ersten Endseite 29 aufweisen. Die Rastvorsprünge erster Art 31a bilden eine erste Raststufe, während die Rastvorsprünge zweiter Art 31b eine zweite Raststufe für einen - nicht dargestellten - Anschlussstecker bilden.

Das Einsatzteil 3 weist gemäß der Ausführungsbeispiele der Fig. 1, 2a, \ 6, 7, 8, 9a, 9b und 11 auf seinem Innenumfang Leckageausnehmungen erster Art 34 und Leckageausnehmungen zweiter Art 35 auf. Die Leckageausnehmungen 34, 35 sind folglich im Verbindungsbereich 20 des Einsatzteils angeordnet und wirken mit einem in den Verbindungsbereich einbringbaren Anschlussstecker - nicht dargestellt - zusammen. Die Leckageausnehmungen erster Art 34 weisen eine andere axiale Lage in Bezug auf die Mittelachse A des Einsatzteils 3 auf, als die Leckageausnehmungen zweiter Art 35.

Gemäß der Ausführungsbeispiele der Fig. 1, 2a und 2b weist ein Teil der Haltearme 30 auf ihrem Außenumfang jeweils ein Stützelement 32 auf, das das Ausfedern des jeweiligen Haltearms 30 in radialer Richtung begrenzt, um eine Beschädigung des Haltearms 30 zu verhindern. Dazu legt sich das Stützelement 32 innenseitig an den Innenumfang 7 der Anschlussöffnung 4 an. Der Abstand der Stützelemente 32 zur ersten Endseite 29 bestimmt das Verformungsverhalten der Haltearme 30. Die Stützelemente 32 erstrecken sich über die gesamte Breite des jeweiligen Haltearms 30.

Ferner weist ein Teil der Haltearme 30 gemäß der Ausführungsbeispiele der Fig. 2, 8 und 9a eine Aussparung 33 auf, um ein elastisches Ausweichen des jeweiligen Haltearms 30 zu erleichtern.

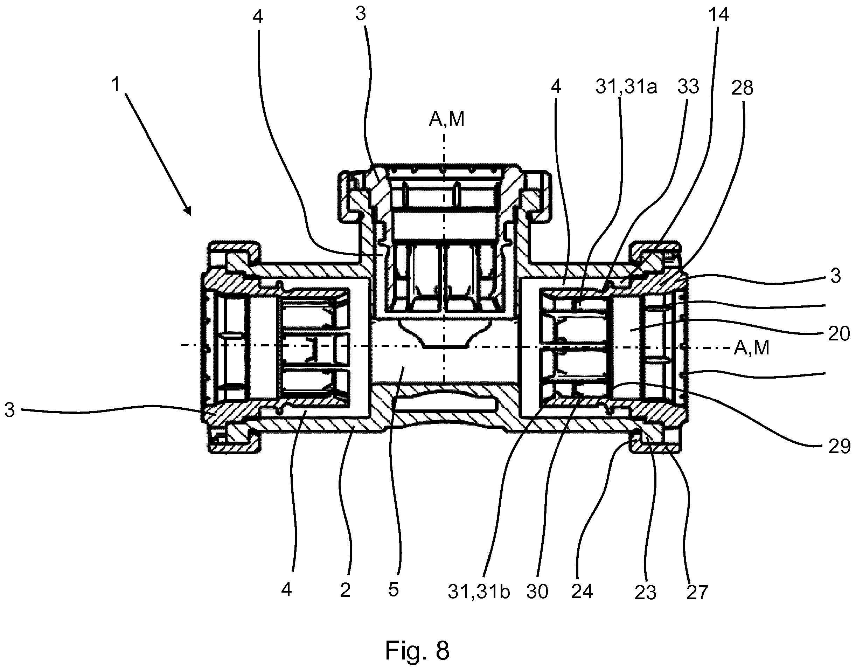

Das Ausführungsbeispiel der Fig. 8 einer Anschlussvorrichtung 1 in geschnittenem Zustand zeigt drei Einsatzteile 3 in Verriegelungsstellung in der jeweiligen Anschlussöffnung 4. Die Verriegelungsvorsprünge 23 sind formschlüssig mit den Gegenverriegelungsvorsprüngen 24 verriegelt. Alle drei Anschlussöffnungen 4 ermöglichen einen Zugang zum Fluidkanal 5. Der Kragen 27 der Einsatzteile 3 übergreift jeweils das Kupplungselement 2 im Bereich der Anschlussöffnungen 4 bzw. im Bereich der Verriegelungsvorsprünge 23.

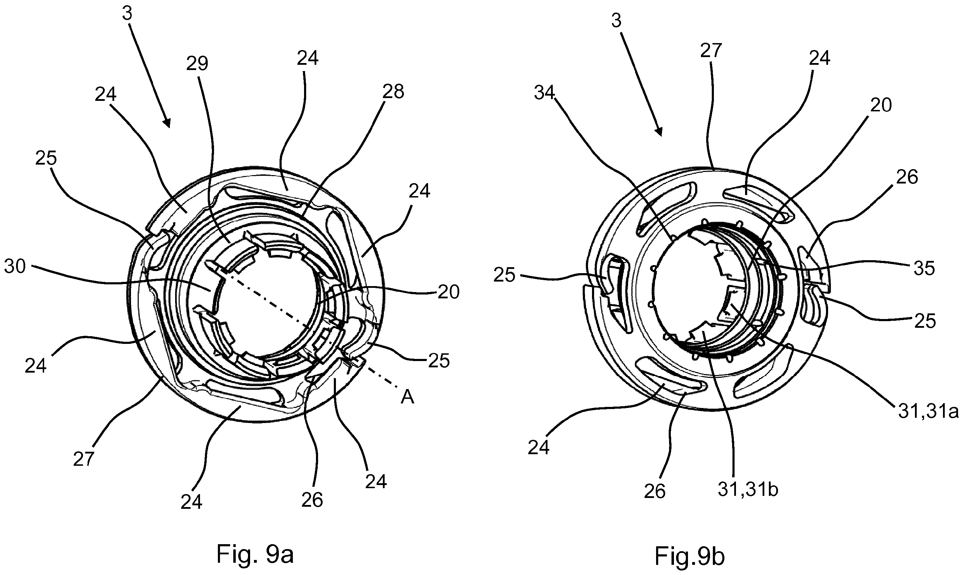

Fig. 10 zeigt ein Ausführungsbeispiel einer Anschlussvorrichtung 1 mit einem Einsatzteil 3 gemäß Fig. 9a und 9b in Verriegelungsstellung. Die Gegenverriegelungsvorsprünge 24 untergreifen die Verriegelungsvorsprünge 23 formschlüssig. Die Anschläge 26 verhindern ein Weiterdrehen des Einsatzteils 3, wobei die Rastarme 25 ein Zurückdrehen verhindern, indem sie kraftformschlüssig mit der Verriegelungsfläche 23a, nämlich einer in Umfangsrichtung ausgerichteten Fläche an einem Verriegelungsvorsprung 23, zusammenwirken.

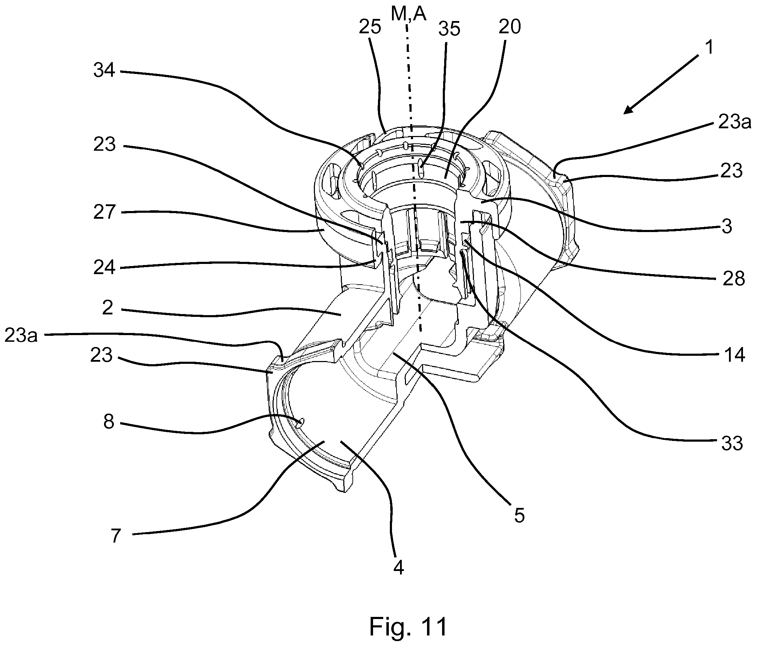

Fig. 11 zeigt ein Ausführungsbeispiel einer Anschlussvorrichtung 1 in teilweise geschnittener Darstellung. Das Einsatzteil 3 befindet sich in Verriegelungsstellung, so dass die Gegenverriegelungsvorsprünge 24 die Verriegelungsvorsprünge 23 des Kupplungselementes 2 untergreifen.

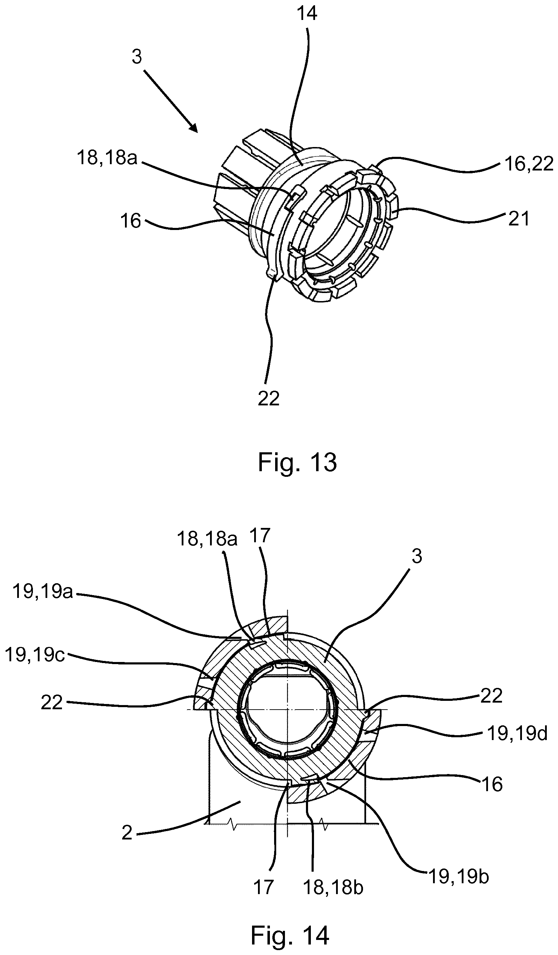

Fig. 12 zeigt ein Ausführungsbeispiel eines Kupplungselementes 2 in perspektivischer Ansicht. An den Anschlussöffnungen 4 weist das Kupplungselement 2 bei diesem Ausführungsbeispiel zwei gegenüberliegend auf dem Umfang angeordnete Haltenuten 17 auf, die in vorbeschriebener Weise mit zwei entsprechend gegenüberliegend auf dem Umfang des Einsatzteils 3 angeordneten Haltekragen 16 - siehe Fig. 13 und Fig. 14 - zusammenwirken. An jeder Haltenut 17 sind jeweils zwei Rastmittel 19, hier in Form von Rastausnehmungen 19a, 19c, an dem Kupplungselement 2 vorgesehen. Im Bereich der Anschlussöffnungen 4 sind die Leckageausnehmungen 8 in einem ersten Bereich 11 gleichmäßig und regelmäßig zueinander beabstandet angeordnet. In einem zweiten Bereich 12 sind - wie bereits zu Fig. 3 beschrieben - keine Leckageausnehmungen ausgebildet.

Fig. 13 zeigt ein Ausführungsbeispiel eines Einsatzteils 3 in perspektivischer Ansicht. Das Einsatzteil 3 ist zum Zusammenwirken mit dem Kupplungselement 2 gemäß Fig. 12 ausgebildet. Das Einsatzteil 3 weist zwei umfänglich gegenüberliegend angeordnete Haltekragen 16 auf. Die Nut 14 für einen Dichtungsring 15 weist den bereits für die Fig. 2b und Fig. 2a beschriebenen Verlauf mit entsprechender Funktionalität auf. Das Einsatzteil 3 weist ein Montageprofil 21 auf, das bei diesem Ausführungsbeispiel als Montagekrone ausgebildet ist, die zur Aufnahme eines Nutenschlüssels geeignet ist.

Gemäß Fig. 13 und Fig. 14 weist jeder Haltekragen 16 jeweils ein Rastmittel 18 auf. Das Rastmittel ist als Rastarme 18a, 18b ausgebildet - siehe Fig. 14. Zudem ist an jedem Haltekragen 16 ein Anschlag 22 ausgebildet, der dazu dient, die Verriegelungsstellung zu definieren und ein Weiterdrehen des Einsatzteils 3 in der Anschlussöffnung 4 zu verhindern, siehe beispielhaft Fig. 5. In der verriegelten Stellung gemäß Fig. 14 greifen die beiden Rastmittel 18 in Form von Rastarmen 18a, 18b in die Rastmittel 19 in Form von Rastausnehmungen 19a, 19b ein. Gemäß Fig. 14 ist im Bereich jeder Haltenut 17 zusätzlich ein zweites Rastmittel 19 in Form einer zweiten Rastausnehmung 19c, 19d vorgesehen. Die Rastausnehmungen 19c, 19d dienen bei diesem Ausführungsbeispiel zum Realisieren einer Vorraststellung. Die finale Raststellung wird mit den Rastausnehmungen 19a, 19b realisiert, insbesondere dann, wenn die Anschläge 22 jeweils anliegen.

Zur Montage wird das Einsatzteil 3 in die Anschlussöffnung 4 eingeführt, so dass die beiden Haltekragen 16 zunächst zwischen die beiden Haltenuten 17 eintreten. Anschließend erfolgt eine Drehung um einen vorbestimmten Winkel, so dass die Rastarme 18a,18b mit den Rastausnehmungen 19a,19b verrasten. Die vollständig verrastete, finale Raststellung ist in Fig. 14 gezeigt. Ein Lösen des Einsatzteils 3 kann erfolgen, wenn die Rastarme 18a,18b gemäß Fig. 14 durch die Rastausnehmungen 19a, 19b mit einem Werkzeug zurückgedrückt werden. Gleiches gilt dann für die Vorraststellung in den Rastausnehmungen 19c, 19d.

### Bezugszeichen

- 1: Anschlussvorrichtung
- 2: Kupplungselement
- 3: Einsatzteil
- 4: Anschlussöffnung
- 5: Fluidkanal
- 6: Dichtmittel
- 7: Innenumfang
- 8: Leckageausnehmung
- 9: Erster Abschnitt von 6
- 10: Zweiter Abschnitt von 6
- 11: Erster Bereich von 7
- 12: Zweiter Bereich von 7
- 13: Verbindungsabschnitt
- 14: Nut
- 15: Dichtungsring
- 16: Haltekragen
- 17: Haltenut
- 18: Rastmittel
- 18a: Rastarm
- 18b: Rastarm
- 19: Rastmittel
- 19a: Rastausnehmung
- 19b: Rastausnehmung
- 20: Verbindungsbereich
- 21: Montageprofil
- 22: Anschlag
- 23: Verriegelungsvorsprung
- 23a: Verriegelungsfläche
- 24: Gegenverriegelungsvorsprung
- 25: Rastarme
- 26: Anschläge
- 27: Kragen
- 28: Einsatzteilgrundkörper
- 29: Erste Endseite
- 30: Haltearme
- 31: Rastvorsprünge
- 31a: Rastvorsprünge erster Art
- 31b: Rastvorsprünge zweiter Art
- 32: Stützelement
- 33: Aussparung
- 34: Leckageausnehmung erster Art
- 35: Leckageausnehmung zweiter Art

- A: Mittelachse des Einsatzteils 3
- M: Mittelachse der Anschlussöffnung 4
- F, G: Ebenen
- α, β: Winkel

## Patentansprüche

1. Anschlussvorrichtung (1) für Medienleitungen, mit mindestens einem Kupplungselement (2) und mindestens einem Einsatzteil (3), wobei das Kupplungselement (2) mindestens eine Anschlussöffnung (4) und mindestens einen Fluidkanal (5) aufweist, wobei das Einsatzteil (3) zumindest teilweise in die Anschlussöffnung (4) einbringbar ist, wobei das Einsatzteil (3) mindestens ein umgebendes Dichtmittel (6) aufweist, und wobei zumindest in der Anschlussöffnung (4) Leckageausnehmungen (8) angeordnet sind,
**dadurch gekennzeichnet, dass**
das Einsatzteil (3) in der Anschlussöffnung (4) durch eine Drehung um einen vorbestimmten Winkel (α) um die Mittelachse (M) der Anschlussöffnung (4), ausgehend von einer Einbringstellung in eine Verriegelungsstellung, an dem Kupplungselement (2) befestigbar ist, dass das Dichtmittel (6) zumindest abschnittsweise eine variierende axiale Lage in Bezug auf eine Mittelachse (A) des Einsatzteils (3) aufweist, dass das Dichtmittel (6) mindestens einen ersten Abschnitt (9) mit einer ersten axialen Lage aufweist, dass das Dichtmittel (6) mit dem ersten Abschnitt (9) einen Leckagepfad freigibt, wenn der erste Abschnitt (9) mit mindestens einer Leckageausnehmung (8) überlappend angeordnet ist, dass der erste Abschnitt (9) in der Einbringstellung mit mindestens einer Leckageausnehmung (8) überlappend angeordnet ist, und dass der erste Abschnitt (9) in der Verriegelungsstellung in einem Bereich zwischen zwei Leckageausnehmungen (8) angeordnet ist, so dass kein Leckagepfad freigegeben ist.

2. Anschlussvorrichtung (1) nach Anspruch 1,
**dadurch gekennzeichnet, dass**
die Leckageausnehmungen (8) in mindestens einem ersten Bereich (11) eines Innenumfangs (7) der Anschlussöffnung (4), insbesondere gleichmäßig, verteilt angeordnet sind und dass in mindestens einem zweiten Bereich (12) des Innenumfangs (7) keine Leckageausnehmungen (8) ausgebildet sind, bevorzugt dass der erste Abschnitt (9) des Dichtmittels (6) eine umfängliche Erstreckung aufweist, die gewährleistet, dass der erste Abschnitt (9) im ersten Bereich (11) des Innenumfangs (7) mindestens zwei Leckageausnehmungen (8) überlappt.

3. Anschlussvorrichtung (1) nach Anspruch 1 oder 2,
**dadurch gekennzeichnet, dass**
das Dichtmittel (6) in einer gedachten Ebene (E) angeordnet ist, die in einem Winkel (β) zur Mittelachse (A) des Einsatzteils (3) geneigt ist, insbesondere in einem Winkel zwischen 15° und 45°.

4. Anschlussvorrichtung (1) nach Anspruch 1 oder 2,
**dadurch gekennzeichnet, dass**
das Dichtmittel (6) mit dem ersten Abschnitt (9) in einer ersten gedachten Ebene (F) angeordnet ist, dass die Mittelachse (A) des Einsatzteils (3) eine Ebenennormale zur ersten gedachten Ebene (F) ist, dass das Dichtmittel (6) in einem zweiten Abschnitt (10) in einer zweiten gedachten Ebene (G) angeordnet ist, dass die erste gedachte Ebene (F) parallel zur zweiten gedachten Ebene (G) ausgerichtet ist, und dass zwischen der ersten gedachten Ebene (F) und der zweiten gedachten Ebene (G) mindestens zwei Verbindungsabschnitte (13) des Dichtmittels (6) ausgebildet sind.

5. Anschlussvorrichtung (1) nach einem der Ansprüche 1 bis 4,
**dadurch gekennzeichnet, dass**
das Dichtmittel (6) mindestens eine Nut (14) und mindestens einen Dichtungsring (15) aufweist, insbesondere dass der Dichtungsring in die Nut angeformt ist.

6. Anschlussvorrichtung (1) nach einem der Ansprüche 1 bis 5,
**dadurch gekennzeichnet, dass**
das Einsatzteil (3) mindestens einen Haltekragen (16) aufweist, dass sich der Haltekragen (16) über einen Teil des Umfangs des Einsatzteils (3) erstreckt, dass das Kupplungselement (2) mindestens eine Haltenut (17) aufweist, und dass der Haltekragen (16) bei der Drehung aus der Einbringstellung in die Verriegelungsstellung in formschlüssigen Eingriff mit der Haltenut (17) gebracht wird.

7. Anschlussvorrichtung (1) nach Anspruch 6,
**dadurch gekennzeichnet, dass**
an dem Haltekragen (16) mindestens ein in Radialrichtung orientiertes Rastmittel (18) ausgebildet ist, insbesondere mindestens zwei in Radialrichtung ausgebildete Rastarme (18a, 18b), und dass das Rastmittel (18) mit mindestens einem korrespondierenden Rastmittel (19), insbesondere mindestens einer Rastausnehmung (19a), bevorzugt zwei Rastausnehmungen (19a, 19b), an der Haltenut (17) zusammenwirkt, um eine Drehbewegung des Einsatzteils (3) zurück in Richtung der Einbringstellung zu verhindern.

8. Anschlussvorrichtung (1) nach Anspruch 6 oder 7,
**dadurch gekennzeichnet, dass**
am Haltekragen (16) mindestens ein Anschlag (22) vorgesehen ist, der mit dem Kupplungselement (2) zusammenwirkt und die Drehung des Einsatzteils (3) begrenzt.

9. Anschlussvorrichtung (1) nach einem der Ansprüche 1 bis 5,
**dadurch gekennzeichnet, dass**
das Kupplungselement (2) eine Mehrzahl die Aufnahmeöffnung (4) umgebender, insbesondere in radialer Richtung angeordneter, Verriegelungsmittel (23), bevorzugt sechs Verriegelungsmittel (23), aufweist, dass das Einsatzteil (3) eine Mehrzahl von zu den Verriegelungsmitteln (23) des Kupplungselementes (2) korrespondierende Gegenverriegelungsmittel (14), bevorzugt sechs Gegenverriegelungsmittel (24) aufweist, dass die Gegenverriegelungsmittel (24) in der Einbringstellung in axialer Richtung an den Verriegelungsmitteln (23) vorbeiführbar sind, und dass die Gegenverriegelungsmittel (24) durch Drehung des Einsatzteils (3) um den vorbestimmten Winkel (α) um die Mittelachse (A) des Einsatzteils (3) relativ zu den Verriegelungsmitteln (23) bewegt werden und formschlüssig mit diesen zusammenwirken, so dass das Einsatzteil (3) nicht mehr in einer Richtung parallel zur Mittelachse (A) des Einsatzteils (3) aus der Anschlussöffnung (4) entnehmbar ist.

10. Anschlussvorrichtung (1) nach Anspruch 9,
**dadurch gekennzeichnet, dass**
das Einsatzteil (3) mindestens ein Rastmittel aufweist, und dass das Rastmittel in der Verriegelungsstellung eine Drehung des Einsatzteils (3) in Richtung der Einbringstellung verhindert, indem das Rastmittel mit mindestens einem Verriegelungsmittel (23) des Kupplungselements (2), insbesondere kraftformschlüssig, zusammenwirkt.

11. Anschlussvorrichtung (1) nach Anspruch 10,
**dadurch gekennzeichnet, dass**
das Einsatzteil (3) mindestens zwei Rastmittel aufweist, insbesondere dass die Rastmittel als federelastische Rastarme (25) ausgebildet sind, bevorzugt dass die Rastarme (25) zumindest teilweise radial nach innen gebogen sind.

12. Anschlussvorrichtung (1) nach einem der Ansprüche 1 bis 11,
**dadurch gekennzeichnet, dass**
das Einsatzteil (3) mindestens einen, insbesondere hülsenartigen, Einsatzteilgrundkörper (28) aufweist, dass der Einsatzteilgrundkörper (28) an einer ersten Endseite (29) mindestens zwei ausgehend vom Einsatzteilgrundkörper (28) in Längsrichtung ausgebildete, insbesondere radial flexible, Haltearme (30) aufweist, so dass ein Verbindungsbereich (20) als Steckeraufnahme zum Zusammenwirken mit einem Anschlussstecker einer Medienleitung ausgebildet ist, insbesondere dass an den Haltearmen (30) jeweils mindestens ein Rastvorsprung (31,31a,31b) ausgebildet ist.

13. Anschlussvorrichtung (1) nach Anspruch 12,
**dadurch gekennzeichnet, dass**
mehr als zwei Haltearme (30) ausgebildet sind, und dass die Rastvorsprünge (31,31a,31b) an den Haltearmen (30) unterschiedliche Abstände in Längsrichtung zu der ersten Endseite (29) aufweisen.

14. Anschlussvorrichtung (1) nach Anspruch 12 oder 13,
**dadurch gekennzeichnet, dass**
an mindestens einem Haltearm (30) radial außenseitig ein Stützelement (32) angeordnet ist, und dass die radiale Bewegbarkeit des Haltearms (30) durch Abstützung über das Stützelement (32) begrenzbar ist, insbesondere dass das Stützelement (32) etwa auf einem Drittel oder der Hälfte der Länge des Haltearms (30) angeordnet ist, bevorzugt dass die Haltearme (30) ein Stützelement (30) aufweisen, deren Rastvorsprünge (32b) am weitesten von der ersten Endseite (29) entfernt sind.

## Claims

1. Connection device (1) for media lines, having at least one coupling element (2) and at least one insert part (3), the coupling element (2) having at least one connection opening (4) and at least one fluid channel (5), the insert part (3) being at least partially insertable into the connection opening (4), the insert part (3) having at least one surrounding sealant (6), and leakage recesses (8) being arranged at least in the connection opening (4),
**characterized in that**
the insert part (3) can be fastened to the coupling element (2) in the connection opening (4) by rotation through a predetermined angle (α) about the center axis (M) of the connection opening (4), starting from an insertion position into a locking position, **in that** the sealant (6) has, at least in sections, a varying axial position with respect to a center axis (A) of the insert part (3), **in that** the sealant (6) has at least a first section (9) with a first axial position that the sealant (6) with the first section (9) clears a leakage path when the first section (9) is arranged overlapping with at least one leakage recess (8), that the first section (9) in the insertion position is arranged overlapping with at least one leakage recess (8), and that the first section (9) in the locking position is arranged in an area between two leakage recesses (8) so that no leakage path is cleared.

2. Connection device (1) according to claim 1,
**characterized in that**
the leakage recesses (8) are arranged in at least a first area (11) of an inner circumference (7) of the connection opening (4), in particular evenly distributed, and that no leakage recesses (8) are formed in at least a second area (12) of the inner circumference (7), preferably that the first section (9) of the sealant (6) has a circumferential extension which ensures that the first section (9) overlaps at least two leakage recesses (8) in the first area (11) of the inner circumference (7).

3. Connection device (1) according to claim 1 or 2,
**characterized in that**
the sealant (6) is arranged in an imaginary plane (E) which is inclined at an angle (β) to the center axis (A) of the insert part (3), in particular at an angle between 15° and 45°.

4. Connection device (1) according to claim 1 or 2,
**characterized in that**
the sealant (6) is arranged with the first section (9) in a first imaginary plane (F), **in that** the center axis (A) of the insert part (3) is a plane normal to the first imaginary plane (F), **in that** the sealant (6) is arranged in a second section (10) in a second imaginary plane (G) **in that** the first imaginary plane (F) is aligned parallel to the second imaginary plane (G), and **in that** at least two connecting sections (13) of the sealant (6) are formed between the first imaginary plane (F) and the second imaginary plane (G).

5. Connection device (1) according to any one of claims 1 to 4,
**characterized in that**
the sealant (6) has at least one groove (14) and at least one sealing ring (15), in particular that the sealing ring is integrally formed in the groove.

6. Connection device (1) according to any one of claims 1 to 5,
**characterized in that**
the insert part (3) has at least one retaining collar (16), **in that** the retaining collar (16) extends over part of the circumference of the insert part (3), **in that** the coupling element (2) has at least one retaining groove (17), and **in that** the retaining collar (16) is brought into positive engagement with the retaining groove (17) during rotation from the insertion position into the locking position.

7. Connection device (1) according to claim 6,
**characterized in that**
at least one radially oriented detent (18) is formed on the retaining collar (16), in particular at least two radially oriented detent recesses (18a, 18b), and **in that** the detent means (18) cooperates with at least one corresponding detent (19), in particular at least one detent recess (19a), preferably two detent recesses (19a, 19b), on the retaining groove (17) in order to prevent a rotational movement of the insert part (3) back in the direction of the insertion position.

8. Connection device (1) according to claim 6 or 7,
**characterized in that**
at least one stop (22) is provided on the retaining collar (16), which stop cooperates with the coupling element (2) and limits the rotation of the insert part (3).

9. Connection device (1) according to any of claims 1 to 5,
**characterized in that**
the coupling element (2) has a plurality of locking means (23), preferably six locking means (23), surrounding the receiving opening (4), in particular arranged in the radial direction, **in that** the insert part (3) has a plurality of counter-locking means (14), preferably six counter-locking means (24), corresponding to the locking means (23) of the coupling element (2), **in that** the counter-locking means (24) can be guided in the axial direction past the locking means (23) in the insertion position and **in that** the counter-locking means (24) are moved relative to the locking means (23) by rotation of the insert part (3) through the predetermined angle (α) about the center axis (A) of the insert part (3) and interact positively therewith, so that the insert part (3) can no longer be removed from the connection opening (4) in a direction parallel to the center axis (A) of the insert part (3).

10. Connection device (1) according to claim 9,
**characterized in that**
the insert part (3) has at least one detent, and **in that** the detent prevents rotation of the insert part (3) in the direction of the insertion position in the locking position by the detent cooperating with at least one locking means (23) of the coupling element (2), in particular in a force-locking manner.

11. Connection device (1) according to claim 10,
**characterized in that**
the insert part (3) has at least two detents, in particular **in that** the detents are designed as resilient latching arms (25), preferably **in that** the latching arms (25) are at least partially bent radially inwards.

12. Connection device (1) according to any one of claims 1 to 11,
**characterized in that**
the insert part (3) has at least one, in particular sleeve-like, insert base body (28), **in that** the insert base body (28) has, on a first end face (29), at least two, in particular radially flexible, retaining arms (30) formed starting from the insert base body (28) in the longitudinal direction, so that a connection area (20) is formed as a plug receptacle for interacting with a connecting plug of a media line, in particular **in that** at least one latching projection (31, 31a, 31b) is formed on each of the retaining arms (30).

13. Connection device (1) according to claim 12,
**characterized in that**
more than two retaining arms (30) are formed, and **in that** the latching projections (31, 31a, 31b) on the retaining arms (30) have different distances in the longitudinal direction from the first end face (29).

14. Connection device (1) according to claim 12 or 13,
**characterized in that**
a support element (32) is arranged radially on the outside of at least one retaining arm (30), and **in that** the radial movability of the retaining arm (30) can be limited by support via the support element (32), in particular **in that** the support element (32) is arranged over approximately one third or half of the length of the retaining arm (30), preferably **in that** the retaining arms (30) have a support element (30) whose latching projections (32b) are furthest away from the first end face (29).

## Revendications

1. Dispositif de raccordement (1) pour conduites fluides, avec au moins un élément de couplage (2) et au moins une partie d'insertion (3), l'élément de couplage (2) comportant au moins une ouverture de raccordement (4) et au moins un canal de fluide (5), dans lequel la partie d'insertion (3) peut être introduction au moins en partie dans l'ouverture de raccordement (4), dans lequel la partie d'insertion (3) comporte au moins un moyen d'étanchéification (6) alentour et dans lequel des évidements de fuite (8) sont disposés au moins dans l'ouverture de raccordement (4), **caractérisé en ce que** la partie d'insertion (3) peut être fixée à l'élément de couplage (2) dans l'ouverture de raccordement (4) au travers d'un pivotement réalisé selon un angle (α) prédéfini autour de l'axe central (M) de l'ouverture de raccordement (4), à partir d'une position d'introduction dans une position de verrouillage, que le moyen d'étanchéification (6) comporte au moins en partie une position axiale variable par rapport à un axe central (A) de la partie d'insertion (3), que le moyen d'étanchéification (6) comporte au moins une première section (9) avec une première position axiale, que le moyen d'étanchéification (6) avec la première section (9) libère un chemin de fuite lorsque la première section (9) est disposée de façon chevauchante avec au moins un évidement de fuite (8), que la première section (9) est disposée de façon chevauchante dans la position d'introduction avec au moins un évidement de fuite (8) et que la première section (9) est disposée dans la position de verrouillage dans une région située entre deux évidements de fuite (8), de façon à ne libérer aucun chemin de fuite.

2. Dispositif de raccordement (1) selon la revendication 1, **caractérisé en ce que** les évidements de fuite (8) sont disposés de façon répartie dans au moins une première région (11) d'une périphérie intérieure (7) de l'ouverture de raccordement (4), notamment de façon uniforme et que dans au moins une deuxième région (12) de la périphérie intérieure (7), aucun évidement de fuite (8) n'est réalisé, de façon préférée que la première section (9) du moyen d'étanchéification (6) comporte un prolongement circonférentiel garantissant que la première section (9) chevauche au moins deux évidements de fuite (8) dans la première région (11) de la périphérie intérieure (7).

3. Dispositif de raccordement (1) selon la revendication 1 ou 2, **caractérisé en ce que** le moyen d'étanchéification (6) est disposé dans un plan imaginaire (E)incliné selon un angle (β) par rapport à l'axe central (A) de la partie d'insertion (3), notamment selon un angle compris entre 15° et 45°.

4. Dispositif de raccordement (1) selon la revendication 1 ou 2, **caractérisé en ce que** le moyen d'étanchéification (6) est disposé avec la première section (9) dans un premier plan imaginaire (F), que l'axe central (A) de la partie d'insertion (3) est une normale au plan par rapport au premier plan imaginaire (F), que le moyen d'étanchéification (6) est disposé dans une deuxième section (10) prévue dans un deuxième plan imaginaire (G), que le premier plan imaginaire (F) est orienté parallèlement au deuxième plan imaginaire (G) et qu'au moins deux sections de liaison (13) du moyen d'étanchéification (6) sont réalisées entre le premier plan imaginaire (F) et le deuxième plan imaginaire (G).

5. Dispositif de raccordement (1) selon l'une quelconque des revendications 1 à 4, **caractérisé en ce que** le moyen d'étanchéification (6) comporte au moins une rainure (14) et au moins une bague d'étanchéité (15), notamment que la bague d'étanchéité est formée dans la rainure.

6. Dispositif de raccordement (1) selon l'une quelconque des revendications 1 à 5, **caractérisé en ce que** la partie d'insertion (3) comporte au moins un collet de maintien (16), que le collet de maintien (16) s'étend sur une partie de la périphérie de la partie d'insertion (3), que l'élément de couplage (2) comporte au moins une rainure de support (17) et que le collet de maintien (16) est amené en prise par complémentarité de formes avec la rainure de support (17) lors de la rotation de la position d'introduction jusque dans la position de verrouillage.

7. Dispositif de raccordement (1) selon la revendication 6, **caractérisé en ce qu'**au moins un moyen d'arrêt (18) orienté dans la direction radiale est réalisé au niveau du collet de maintien (16), notamment au moins deux bras d'arrêt (18a, 18b) réalisés dans la direction radiale et que le moyen d'arrêt (18) interagit avec au moins un moyen d'arrêt (19) correspondant, notamment au moins un évidement d'arrêt (19a), de façon préférée deux évidements d'arrêt (19a, 19b), au niveau de la rainure de support (17), pour empêcher un mouvement de rotation de la partie d'insertion (3) en arrière en direction de la position d'introduction.

8. Dispositif de raccordement (1) selon la revendication 6 ou 7, **caractérisé en ce qu'**au moins une butée (22) est prévue au niveau du collet de maintien (16), ladite butée interagissant avec l'élément de couplage (2) et limitant la rotation de la partie d'insertion (3).

9. Dispositif de raccordement (1) selon l'une quelconque des revendications 1 à 5, **caractérisé en ce que** l'élément de couplage (2) comporte une pluralité de moyens de verrouillage (23) entourant l'ouverture de réception (4) alentour, notamment disposés dans la direction radiale, de façon préférée six moyens de verrouillage (23), que la partie d'insertion (3) comporte une pluralité de contre-moyens de verrouillage (14) correspondant aux moyens de verrouillage (23) de l'élément de couplage (2), de façon préférée six contre-moyens de verrouillage (24), que les contre-moyens de verrouillage (24) peuvent passer dans la position d'introduction dans la direction axiale au niveau des moyens de verrouillage (23) et que les contre-moyens de verrouillage (24) sont déplacés par rotation de la partie d'insertion (3) selon un angle prédéfini (α) autour de l'axe central (A) de la partie d'insertion (3) par rapport aux moyens de verrouillage (23) et interagissent par complémentarité de forme avec ceux-ci, de sorte que la partie d'insertion (3) ne puisse plus être retirée hors de l'ouverture de raccordement (4) dans une direction s'étendant parallèlement à l'axe central (A) de la partie d'insertion (3).

10. Dispositif de raccordement (1) selon la revendication 9, **caractérisé en ce que** la partie d'insertion (3) comporte au moins un moyen d'arrêt et que le moyen d'arrêt empêche dans la position de verrouillage une rotation de la partie d'insertion (3) en direction de la position d'introduction en amenant le moyen d'arrêt à interagir avec au moins un moyen de verrouillage (23) de l'élément de couplage (2), notamment par complémentarité de formes et de forces.

11. Dispositif de raccordement (1) selon la revendication 10, **caractérisé en ce que** la partie d'insertion (3) comporte au moins deux moyens d'arrêt, notamment que les moyens d'arrêt sont réalisés sous la forme de bras d'arrêt (25) élastiques à ressort, de façon préférée que les bras d'arrêt (25) sont incurvés au moins en partie vers l'intérieur dans le plan radial.

12. Dispositif de raccordement (1) selon l'une quelconque des revendications 1 à 11, **caractérisé en ce que** la partie d'insertion (3) comporte au moins un corps de base partiel d'insertion (28) notamment de type fourreau, que le corps de base partiel d'insertion (28) comporte au niveau du premier côté d'extrémité (29) au moins deux bras d'arrêt (30) réalisés dans la direction longitudinale à partir du corps de base partiel d'insertion (28), lesdits bras étant notamment flexibles dans le plan radial, de sorte qu'une région de liaison (20) soit réalisée sous la forme d'un logement de connecteur en vue d'interagir avec une fiche de raccordement d'un câble de support, notamment qu'au moins une saillie d'arrêt (31, 31a, 31b) est respectivement réalisée au niveau des bras d'arrêt (30).

13. Dispositif de raccordement (1) selon la revendication 12, **caractérisé en ce que** plus de deux bras d'arrêt (30) sont prévus et que les saillies d'arrêt (31, 31a, 31b) présentent différentes distances au niveau des bras d'arrêt (30) dans la direction longitudinale par rapport au premier côté d'extrémité (29).

14. Dispositif de raccordement (1) selon la revendication 12 ou 13, **caractérisé en ce qu'**un élément de maintien (32) est disposé du côté extérieur dans le plan radial au niveau d'au moins un bras d'arrêt (30) et que la mobilité radiale du bras d'arrêt (30) peut être limité par étalement au travers de l'élément de maintien (32), notamment que l'élément de maintien (32) est disposé approximativement sur un tiers ou sur la moitié de la longueur du bras d'arrêt (30), de façon préférée que les bras d'arrêt (30) comportent un élément de maintien (30) dont les saillies d'arrêt (32b) s'écartent le plus du premier côté d'extrémité (29).
